# EUROPÄISCHE PATENTSCHRIFT

(11) **EP 1 052 480 B1**
(45) Veröffentlichungstag und Bekanntmachung des Hinweises auf die Patenterteilung: **03.03.2004**
(21) Anmeldenummer: 00110059.3
(22) Anmeldetag: 12.05.2000
(51) Int. Cl.: G01D 5/14, G01D 5/16, G01D 5/245

(54) **Einrichtung zur Ermittlung der Relativposition zweier Körper**
Device for determining the relative position of two bodies
Dispositif de détection de la position relative de deux corps

(30) Priorität: 14.05.1999 DE 19922363
(43) Veröffentlichungstag der Anmeldung: 15.11.2000
(73) Patentinhaber: Rexroth Star GmbH, 97424 Schweinfurt (DE)
(72) Erfinder: Blattner, Peter, 97497 Dingolshausen (DE); Schnös, Bruno, 97478 Knetzgau (DE); Kirchner, Herbert, 97422 Schweinfurt (DE)
(74) Vertreter: Herzog, Markus, Dipl.-Phys. Dr.

(56) Entgegenhaltungen:
- EP-A- 0 624 780
- WO-A-92/02781
- WO-A-92/04599
- DE-C- 4 309 863
- FR-A- 2 746 498
- US-A- 4 541 181
- US-A- 4 584 773
- S. UEMURA: "Sony Magnescale" JAPAN ELECTRONIC ENGINEERING, Nr. 36, November 1969 (1969-11), Seiten 20-23, XP002020003

## Beschreibung

Die Erfindung betrifft nach einem ersten Aspekt eine Einrichtung zur Ermittlung der Relativposition zweier relativ zueinander beweglicher Körper, wobei ein erster der beiden Körper über einen Markierungsbereich verteilt Maßmarkierungen trägt und der zweite der beiden Körper eine auf die Maßmarkierungen ansprechende Sensoranordnung trägt, welche im Zuge einer Relativbewegung der beiden Körper den Markierungsbereich befährt, wobei die Maßmarkierungen durch ein von dem ersten Körper gesondertes Abdeckband abgedeckt sind, welches mit seiner dem ersten Körper zugewandten Flachseite auf Auflageflächen des ersten Körpers aufliegt und längs seiner beiden in Bandlängsrichtung verlaufenden Längsränder durch je mindestens eine Längsschweißnaht an dem ersten Körper befestigt ist.

Anordnungen, bei denen die Relativposition zweier relativ zueinander beweglicher Körper bestimmt wird, indem ein Maßband an einem der Körper (einer Trägerschiene) angebracht ist, gegenüber dem der zweite, eine auf die Maßmarkierungen ansprechende Sensoranordnung tragende Körper im Zuge einer Relativbewegung entlang gleitet, sind bekannt, siehe z.B. die US 4,541,181, US 4,584,773, WO 92/02781, FR 2746498, WO 92/04599, EP 0 642 780 und S. Uemura, "Sony Magnescale", Japan Electronic Engineering Nr. 36, 1969, pp 20 - 23.

Zur Befestigung des Maßbands an der Trägerschiene kann eine Klebeverbindung oder auch eine Schweißverbindung (z.B. Punkt- oder Nahtschweißung, siehe EP 0 642 780) vorgesehen sein. Vorzugsweise ist jedoch das Maßband an zwei Fixpunkten an den beiden Stirnseiten der Trägerschiene unter Spannung gehalten, sodass es sich unabhängig von Temperaturschwankungen oder Verbiegungen der Trägerschiene immer glatt an die Trägerschiene anlegt.

Zum Schutz vor mechanischen Einwirkungen und aggressiven Chemikalien besteht oftmals der Wunsch, das Maßband durch eine Abdeckung abzudecken.

Breitentoleranzen des Abdeckbands können oftmals nicht vermieden werden. So ist es nicht ausgeschlossen, daß das Abdeckband über seine Länge hinweg eine - wenn auch geringe - Breitenveränderlichkeit aufweist. Auch bei den Längsschweißnähten kann es vorkommen, daß diese nicht mit exakter Geradlinigkeit angebracht werden können, sondern nur mit gewissen Abweichungen von der exakten Geradlinigkeit. Man kann die Längsschweißnähte direkt an den Längsrändern des Abdeckbands anbringen. Die beiden zuvor angesprochenen Effekte - Breitentoleranzen des Abdeckbands und Ungeradheiten der Längsschweißnähte - können dann aber dazu führen, daß an einigen Stellen längs des Abdeckbands in mehr oder weniger starkem Maße an diesem vorbei "ins Leere" geschweißt wird. Undichte Schweißstellen können die Folge sein. Außerdem werden hierdurch längs des Abdeckbands unterschiedlich große Wärmemengen in das Abdeckband eingeleitet. Beim Schweißen entstehen durch die Wärmeeinleitung Wärmespannungen im Material des Abdeckbands, die sich in einer Verformung des Abdeckbands äußern können. Eine ungleichmäßige Wärmeeinleitung kann jedoch ein unregelmäßiges Verformungsbild des Abdeckbands bewirken, das das Schweißergebnis ebenfalls erheblich beeinträchtigen kann.

Der Erfindung liegt demnach die Aufgabe zugrunde, einen Weg aufzuzeigen, wie beim Schweißen des Abdeckbands ein besseres Schweißergebnis erzielt werden kann.

Zur Lösung dieser Aufgabenstellung sieht der erste Aspekt der Erfindung vor, daß die Längsschweißnähte quer zur Bandlängsrichtung im Abstand vom jeweils benachbarten Längsrand des Abdeckbands verlaufen und im Bereich der Auflageflächen eine Materialverschmelzungszone des Abdeckbands mit dem ersten Körper bilden.

Weil bei dieser Lösung die Längsschweißnähte im Abstand von den Längsrändern des Abdeckbands angebracht werden, ist eine gleichmäßige Wärmeeinleitung über die Länge des Abdeckbands gewährleistet. So werden stets im wesentlichen gleiche Materialmengen des Abdeckbands geschmolzen und mit dem ersten Körper verschmolzen. Es hat sich gezeigt, daß dies die Reduzierung von durch das Schweißen bedingten Verformungen des Abdeckbands fördert. Zudem werden undichte Schweißstellen vermieden.

Die Maßmarkierungen können in einer reliefartigen Vertiefung des ersten Körpers versenkt angeordnet sein, wobei dann das Abdeckband zweckmäßigerweise in die reliefartige Vertiefung eingelegt sein wird. Hierdurch können nicht nur die Maßmarkierungen, sondern auch das Abdeckband weitestgehend vor mechanischer Beschädigung geschützt werden.

Das Abdeckband kann insbesondere derart in die reliefartige Vertiefung eingelegt sein, daß die Außenoberfläche des Abdeckbands annähernd bündig mit angrenzenden Oberflächenbereichen des ersten Körpers liegt. Auf diese Weise wird ein im wesentlichen stufenloser Übergang zwischen dem Abdeckband und dem ersten Körper erreicht, so daß sich eine von Unebenheiten im wesentlichen freie Außenoberfläche der Baueinheit aus erstem Körper und Abdeckband einstellt, die - sofern dies gewünscht ist - eine perfekte Abdichtung des zweiten Körpers gegenüber dem ersten Körper erleichtert. Speziell bei Linearführungseinrichtungen mit einem auf einer Führungsschiene beweglich geführten Schlitten wird nämlich häufig der Schlitten mit einer Dichtung ausgeführt, die in Dichtkontakt mit der Führungsschiene steht und das Eindringen von Schmutz in den Schlitten und das Austreten von Schmierstoff aus dem Schlitten verhindert. Durch eine im wesentlichen bündige Einfügung des Abdeckbands in die Führungsschiene können Verschleißerscheinungen an der Dichtung des Schlittens oder gar eine notwendige Modifikation der Dichtungsform vermieden werden.

Die Schweißmethode nach dem ersten Aspekt der Erfindung hat einen besonderen Vorteil in dem vorstehend erwähnten Fall, daß das Abdeckband annähernd bündig in die reliefartige Vertiefung eingelegt wird. Würde man in diesem Fall die Längsschweißnähte im Stoßbereich zwischen den Längsrändern des Abdeckbands und den seitlichen Flanken der reliefartigen Vertiefung anbringen, könnte der Schweißvorgang negativ beeinflußt werden durch Spalte, die aufgrund von Breitentoleranzen des Abdeckbands oder/und der reliefartigen Vertiefung zwischen dem Abdeckband und den seitlichen Flanken der reliefartigen Vertiefung vorhanden sein können. Indem nun die Längsschweißnähte gemäß dem ersten Aspekt der Erfindung nicht in den Stoßbereichen zwischen dem Abdeckband und der reliefartigen Vertiefung, sondern zur Bandmitte hin angebracht werden, braucht auf solche Spalte keine Rücksicht mehr genommen zu werden. Das Abdeckband kann mit größerer Breitentoleranz gefertigt werden. Zugleich können auch größere Fertigungstoleranzen für die reliefartige Vertiefung in Kauf genommen werden. Statt einer Stumpfstoß-Schweißung wird durch das Abdeckband hindurch geschweißt, wobei die Materialverschmelzung des Abdeckbands mit dem ersten Körper idealerweise vollständig im Bereich der Auflageflächen des ersten Körpers stattfindet.

Ein besonderer Vorteil ergibt sich, wenn die reliefartige Vertiefung als gestufte Vertiefung ausgebildet ist und die Auflageflächen für das Abdeckband von einer Stützstufenanordnung der Vertiefung gebildet sind. In diesem Fall kann sichergestellt werden, daß die Maßmarkierungen durch den Schweißvorgang unbeeinflußt bleiben, auch wenn dieser nicht direkt an den Längsrändern des Abdeckbands stattfindet, sondern zur Bandmitte hin versetzt. Durch die stufige Ausbildung der reliefartigen Vertiefung können nämlich die Maßmarkierungen an einer gegenüber der Stützstufenanordnung vertieften Stelle der Vertiefung angebracht werden, so daß sie vor der beim Schweißen entstehenden Wärme gut geschützt sind.

Bevorzugt wird das Abdeckband durch Laser-Schweißen an dem ersten Körper angebracht. Dies ist deshalb vorteilhaft, weil mittels Laser-Schweißen sehr schmale Schweißnähte realisierbar sind, nur eine vergleichsweise kleine Schmelzzone entsteht und die Schmelzdauer relativ kurz gehalten werden kann. Negative Auswirkungen auf die Maßmarkierungen durch die Wärmeentwicklung beim Laser-Schweißen sind so im wesentlichen nicht zu befürchten.

Andere Schweißverfahren als Laser-Schweißen sind aber nicht grundsätzlich ausgeschlossen. So ist es denkbar, das Abdeckband alternativ durch Elektronenstahl-Schweißen oder durch Plasma-Schweißen an dem ersten Körper anzubringen.

Grundsätzlich können die Maßmarkierungen integral in das Material des ersten Körpers eingearbeitet sein, beispielsweise durch Einätzen von Vertiefungen oder durch Aufprägen von Magnetzuständen. Eine Weiterbildung des ersten Aspekts der Erfindung sieht dagegen vor, daß die Maßmarkierungen an einem von dem ersten Körper und dem Abdeckband gesonderten Markierungsträger angeordnet sind. Dieser kann beispielsweise ein Metallband sein, in das in regelmäßigen oder/und aperiodischen Intervallen Schlitze als Maßmarkierungen eingearbeitet sind.

Es kann vorgesehen sein, dass an einem ersten der beiden Körper ein gesondertes Maßband angebracht ist, welches mindestens eine Spur von in Bandlängsrichtung verteilten Maßmarkierungen aufweist.

Generell ist man bestrebt, das Maßband frei von Falten oder Verwerfungen zu halten, damit nicht die Meßgenauigkeit durch Unebenheiten des Maßbands beeinträchtigt wird und Bewegungen des zweiten Körpers - sofern dieser dicht über das Maßband streicht - durch Welligkeiten des Maßbands behindert werden. Gelegentlich wird die Positionsermittlungseinrichtung in einer Arbeitsumgebung eingesetzt, die relativ starken Temperaturschwankungen unterliegt. Diese Temperaturschwankungen können gleichzeitig an der gesamten Positionsermittlungseinrichtung auftreten; sie können aber auch nur lokal an einzelnen Stellen der Positionsermittlungseinrichtung auftreten. Ein unterschiedliches Wärmeübertragungsverhalten oder/und ein unterschiedliches Wärmedehnungsverhalten des ersten Körpers und des Maßbands können dann bei einem Temperaturabfall der Arbeitsumgebung dazu führen, daß sich der erste Körper schneller oder/und stärker temperaturbedingt zusammenzieht als das Maßband, etwa wenn der erste Körper aus einem stark wärmeleitenden Metall besteht und das Maßband aus einem für Wärme wesentlich schwächer leitfähigen Werkstoff besteht. Die Folge eines solchen Temperaturabfalls können dann Verwerfungen des Maßbands sein, wenn dieses der thermischen Kontraktion des ersten Körpers nicht rasch genug folgen kann. Wünschenswert ist es daher, wenn auch bei Temperaturschwankungen der Arbeitsumgebung Verwerfungen des Maßbands vermieden oder zumindest reduziert werden können.

Dies kann dadurch erreicht werden, dass außerdem das Maßband an mindestens zwei in Bandlängsrichtung im Abstand voneinander angeordneten Fixationsstellen an dem ersten Körper fixiert ist und zwischen den Fixationsstellen in Bandlängsrichtung elastisch gedehnt ist. Die elastische Dehnung des Maßbands schafft einen Bereich, in dem das Maßband einer thermisch bedingten Kontraktion des ersten Körpers folgen und sich ebenfalls zusammenziehen kann, ohne dabei seine Glattheit zu verlieren. Dadurch kann auch für solche Fälle, in denen für den ersten Körper und das Maßband Werkstoffe mit stark unterschiedlichem thermischen Verhalten verwendet werden, bei Temperaturschwankungen das Entstehen von Unebenheiten im Maßband vermieden werden. Zweckmäßigerweise wird das Maßband lediglich im Bereich seiner in Bandlängsrichtung gegenüberliegenden Bandenden an dem ersten Körper fixiert werden. Gleichwohl ist es nicht ausgeschlossen, auch zwischen den Bandenden Fixationsstellen vorzusehen, insbesondere bei Maßbändern sehr großer Länge. Bei solchen sehr langen Maßbändern kann nämlich die Gefahr bestehen, daß sich das Maßband in einer Einbausituation, in der es sich an einer vertikal unteren Seite des ersten Körpers befindet, in mittleren Bandbereichen von dem ersten Körper abhebt, wodurch die Meßgenauigkeit beeinträchtigt werden könnte.

In der Praxis hat es sich als günstig erwiesen, wenn die elastische Dehnung des Maßbands mindestens 30 µm, vorzugsweise mindestens 50 µm, höchstvorzugsweise etwa 70 bis 100 µm, pro Längenmeter des Maßbands beträgt.

Es ist denkbar, daß das Maßband von einem als Meterware gefertigten und von einer Vorratsrolle genommenen Bandmaterial gebildet ist. Auch in diesem Fall erweist sich die elastische Dehnung des Maßbands als vorteilhaft, um das Maßband so zu strecken, daß mögliche Unebenheiten oder Welligkeiten verschwinden, die beim Aufwickeln und Abwickeln des Bandmaterials entstehen können.

Das Maßband ist bevorzugt aus einem metallischen Werkstoff gefertigt, wenngleich auch Kunststoffmaterialien für das Maßband denkbar sind. Wesentlich ist, daß das Material des Maßbands so gewählt ist, daß die beabsichtigte Längung des Maßbands zumindest weitestgehend, gewünschtenfalls ausschließlich im elastischen Bereich statt im plastischen Bereich stattfinden kann. Insbesondere kann das Material des Maßbands so gewählt sein, daß die elastische Dehnung im unteren Teil des Elastizitätsbereichs weit vor der Elastizitätsgrenze liegt.

Grundsätzlich können die Maßmarkierungen in beliebiger Form an dem Maßband angebracht sein. Hinsichtlich der Gestaltung des Maßbands und der Art der Abtastung der Maßmarkierungen durch die Sensoranordnung bestehen prinzipiell keinerlei Beschränkungen. So können die Maßmarkierungen auf optischem, induktivem oder kapazitivem Weg oder mittels Magnetowiderständen oder Hall-Bauelementen oder nach dem Prinzip der Wirbelstromerzeugung gelesen werden. Zur Bildung der Maßmarkierungen kann das Maßband beispielsweise ein optisch lesbares Strichmuster oder ein Magnetisierungsmuster mit abwechselnden magnetischen Nordund Südpolen aufweisen. Denkbar ist es auch, das Maßband mit einem Leiterdrahtmuster zu versehen. Eine bevorzugte Ausführungsform der Erfindung nach dem ersten Aspekt sieht vor, daß das Maßband zur Bildung der Maßmarkierungen mit in Bandlängsrichtung aufeinanderfolgenden Materialschwächungszonen oder Materialdurchbrüchen versehen ist. Wenn die Sensoranordnung zur Abtastung der Maßmarkierungen ein elektrisches oder magnetisches Feld abstrahlt und dieses Feld von dem Material des Maßbands beeinflußt wird, so stellen die Materialschwächungszonen oder Materialdurchbrüche Bandbereiche dar, in denen die Permittivität bzw. Permeabilität des Maßbands anders als in den nicht geschwächten oder durchbrochenen Zonen des Maßbands ist. Diese Schwankungen der Permittivität oder Permeabilität können von der Sensoranordnung erfaßt werden, beispielsweise mittels einer Feldplatte oder eines Hall-Sensors. Beispielsweise wird ein Metallgitterband aus Stahl mit einem relativ hohen Nickelgehalt, beispielsweise bis zu etwa 75 Gew.% Nickel verwendet, in das lediglich als Zahlenbeispiel in einem Teilungsabstand von etwa 1 mm etwa 0,5 mm breite Schlitze eingearbeitet sind, die durch etwa 0,5 mm breite Stege voneinander getrennt sind.

Die Maßmarkierungen können eine Gruppe von Markierungen umfassen, welche in Bandlängsrichtung in regelmäßigen Abständen aufeinanderfolgen. Soweit der Abstand zweier aufeinanderfolgender Markierungen bekannt ist, kann aus der Zahl der von der Sensoranordnung überfahrenen Markierungen die zurückgelegte Wegstrecke des zweiten Körpers bestimmt werden. Wenn die Anfangsposition des zweiten Körpers bekannt ist, kann so mit Hilfe der zurückgelegten Wegstrecke die Endposition des zweiten Körpers bestimmt werden.

Alternativ oder zusätzlich können die Maßmarkierungen eine Gruppe von Referenz-Markierungen umfassen, welche derart gestaltet oder/und an dem Maßband lokalisiert sind, daß ohne Kenntnis einer Anfangsposition des zweiten Körpers relativ zu dem ersten Körper durch Überfahren höchstens einer weniger aufeinanderfolgender Referenz-Markierungen eine zumindest annähernde Bestimmung einer Endposition des zweiten Körpers relativ zu dem ersten Körper ermöglicht ist. Solche Referenz-Markierungen sind insbesondere in Verbindung mit einer Spur regelmäßig angeordneter Maßmarkierungen sinnvoll, um nach einem Funktions- oder Stromausfall der Sensoranordnung und einem damit einhergehenden Verlust von Positionsinformationen über den zweiten Körper rasch dessen Position wenigstens ungefähr ermitteln zu können. Als besonders geeignet hierfür haben sich sogenannte abstandscodierte Referenz-Markierungen erwiesen, bei denen in Bandlängsrichtung einander paarweise benachbarte Referenz-Markierungen einen Abstand voneinander aufweisen, der für mindestens einen Teil der Paare unterschiedlich ist. Soweit der gegenseitige Abstand zwischen den Referenz-Markierungen der einzelnen Paare tabellarisch, beispielsweise in einem elektronischen Speicher, festgehalten ist, kann aus dem gemessenen Abstand zwischen zwei von der Sensoranordnung überfahrenen benachbarten Referenz-Markierungen unmittelbar die Position des zweiten Körpers wenigstens näherungsweise bestimmt werden.

Bei einer Weiterbildung des ersten Aspekts der Erfindung ist vorgesehen, daß der erste Körper ein Längskörper mit einer Längsachse, insbesondere eine Führungsschiene einer Linearführungseinrichtung, ist und das Maßband in Richtung der Längsachse an dem Längskörper angebracht ist.

Die Erfindung betrifft ferner nach einem zweiten Aspekt ein Verfahren zur Herstellung einer Einrichtung zur Ermittlung der Relativposition zweier relativ zueinander beweglicher Körper, wobei ein erster der beiden Körper über einen Markierungsbereich verteilt Maßmarkierungen trägt und der zweite der beiden Körper eine auf die Maßmarkierung ansprechende Sensoranordnung trägt, welche im Zuge einer Relativbewegung der beiden Körper den Markierungsbereich befährt, wobei bei dem Verfahren die Maßmarkierungen durch ein von dem ersten Körper gesondertes Abdeckband abgedeckt werden, welches mit seiner dem ersten Körper zugewandten Flachseite auf Auflageflächen des ersten Körpers aufgelegt wird und längs seiner beiden in Bandlängsrichtung verlaufenden Längsränder durch je mindestens eine Längsschweißnaht an dem ersten Körper befestigt wird, wobei dieses Verfahren insbesondere zur Herstellung der Einrichtung nach dem ersten Aspekt geeignet ist.

Erfindungsgemäß ist bei dem Verfahren nach dem zweiten Aspekt vorgesehen, daß die Längsschweißnähte quer zur Bandlängsrichtung im Abstand vom jeweils benachbarten Längsrand des ungeschweißten Abdeckbands angebracht werden derart, daß sie eine Materialverschmelzung des Abdeckbands mit dem ersten Körper gewünschtenfalls ausschließlich im Bereich der Auflageflächen bewirken. Es gilt hier im wesentlichen das, was vorstehend bereits zum ersten Aspekt der Erfindung gesagt wurde.

Die Vorteile, die sich daraus ergeben, daß im Abstand von den Längsrändern des Abdeckbands geschweißt wird, bleiben auch dann erhalten, wenn der Wunsch besteht, die außerhalb der Längsschweißnähte verbleibenden Randstreifen des Abdeckbands abzutrennen. Dies kann nach dem Schweißen geschehen. Denkbar ist auch, bereits beim Schweißen eine Abtrennung dieser Randstreifen herbeizuführen, indem das Schweißverfahren so gewählt wird und die Schweißenergie so bemessen wird, daß ein Trenn-Schweißen bewirkt wird.

Nach einem dritten Aspekt betrifft die Erfindung schließlich ein Verfahren zur Herstellung einer Einrichtung zur Ermittlung der Relativposition zweier relativ zueinander beweglicher Körper, wobei ein erster der beiden Körper über einen Markierungsbereich verteilt Maßmarkierungen trägt und der zweite der beiden Körper eine auf die Maßmarkierung ansprechende Sensoranordnung trägt, welche im Zuge einer Relativbewegung der beiden Körper den Markierungsbereich befährt, wobei bei dem Verfahren die Maßmarkierungen durch ein von dem ersten Körper gesondertes Abdeckband abgedeckt werden, welches längs seiner beiden in Bandlängsrichtung verlaufenden Längsränder durch je mindestens eine Längsschweißnaht an dem ersten Körper befestigt wird, wobei dieses Verfahren insbesondere zur Herstellung der Einrichtung nach dem ersten Aspekt geeignet ist.

Diesem dritten Aspekt der Erfindung liegt die Aufgabenstellung zugrunde, Verformungen des Abdeckbands gering zu halten, die durch die Wärmeentwicklung beim Schweißen entstehen können.

Hierzu wird erfindungsgemäß vorgeschlagen, daß zwei verschiedenen Längsrändern des Abdeckbands benachbarte Längsschweißnähte im wesentlichen zeitgleich angebracht werden. Es hat sich nämlich gezeigt, daß dann, wenn zunächst nur längs eines der Längsränder geschweißt wird, mit vergleichsweise starken Verformungen des Abdeckbands in seiner Bandebene gerechnet werden muß. Die resultierende Verkrümmung des Abdeckbands kann besonders bei großen Längen des Abdeckbands, beispielsweise im Meterbereich, dazu führen, daß das Abdeckband nicht mehr paßgenau an den ersten Körper angeschweißt werden kann. Um dem entgegenzuwirken, wird bei dem dritten Aspekt der Erfindung zeitgleich längs beider Längsränder des Abdeckbands geschweißt. Dabei wird die Verkrümmungsneigung des Abdeckbands in dessen Bandebene, die durch das Schweißen an dem einen Längsrand hervorgerufen wird, durch die Verkrümmungsneigung, die durch das Schweißen an dem anderen Längsrand hervorgerufen wird, im wesentlichen aufgehoben, so daß das Abdeckband im wesentlichen gerade und verkrümmungsfrei bleibt.

Es empfiehlt sich insbesondere, die im wesentlichen zeitgleich angebrachten Längsschweißnähte mit gleicher Schweißrichtung anzubringen, wobei zweckmäßigerweise die Schweißnähte gemeinsam von ein und demselben Längsende des Abdeckbands her angebracht werden.

Die im wesentlichen zeitgleich angebrachten Längsschweißnähte können mittels eines Laser-Schweißgeräts mit Bifokaloptik angebracht werden. Solche Laser-Schweißgeräte sind verfügbar. Beispielsweise werden von der Firma Haas-Laser GmbH verschiedene Hochleistungs-Laser-Geräte angeboten, beispielsweise eines mit der Typenbezeichnung "HL 3006 D".

Bei dem Verfahren gemäß dem zweiten und dritten Aspekt der vorliegenden Erfindung ist bevorzugt vorgesehen, dass ein Maßband an einem gesonderten Träger angebracht wird, wobei das Maßband an mindestens zwei in Bandlängsrichtung im Abstand voneinander angeordneten Fixationsstellen unter elastischer Dehnung zwischen den Fixationsstellen an dem Träger fixiert wird.

Wenn der erste Körper ein Längskörper ist, wird zur Bereitstellung dieses Längskörpers häufig ein Längenstück von einem Materialstrang an einer Trennstelle abgetrennt. Führungsschienen für Linearführungseinrichtungen werden beispielsweise oftmals als mehrere Meter lange Schienenstränge in einem Walzverfahren, einem Strangpreßverfahren oder einem Stranggießverfahren hergestellt. Je nach Kundenwunsch werden dann von diesen Schienensträngen einzelne Schienenstücke abgelängt. Wenn die Schienenstücke erst nach ihrer Ablängung vom Schienenstrang mit einem Maßband versehen werden, ist der Verfahrens- und Zeitaufwand hierfür sehr groß, da die Prozedur der elastischen Längung des Maßbands bei jedem einzelnen der Schienenstücke durchgeführt werden muß. Es können sich zudem konstruktive Probleme ergeben, wenn man bedenkt, daß die abgelängten Schienenstücke oftmals unterschiedlich lang sind und deshalb die Forderung besteht, daß eine Apparatur, die eine Einspannung der Schienenstücke und das Strecken des Maßbands erlaubt, entsprechend anpassungsfähig sein muß.

Eine Vereinfachung der zuvor skizzierten Vorgehensweise wird erreicht, wenn der erste Körper ein Längskörper ist, der als Längenstück von einem Materialstrang an einer Trennstelle abgetrennt wird, wobei ein Maßband verwendet wird, das sich über einen Materialabschnitt des Materialstrangs erstreckt, der länger, gewünschtenfalls um ein Mehrfaches länger, als das abzutrennende Längenstück ist, wobei dieses Maßband zunächst lediglich im Bereich seiner in Richtung der Längsachse gegenüberliegenden Bandenden an endseitigen Fixationsstellen unter elastischer Dehnung an dem Materialstrang fixiert wird, das Maßband sodann in Richtung der Längsachse beidseits der Trennstelle an zusätzlichen trennstellennahen Fixationsstellen an dem Materialstrang fixiert wird und anschließend der Materialstrang zusammen mit dem Maßband zwischen den trennstellennahen Fixationsstellen durchtrennt wird.

Bei diesem Verfahren wird das Maßband demnach nicht an dem bereits abgelängten Längenstück des Materialstrangs angebracht, sondern bevor von dem Materialstrang je nach Kundenwunsch einzelne Längenstücke abgetrennt werden. Außerdem wird ein Maßband mit einer Länge verwendet, die nicht nur für ein einzelnes Längenstück reicht, sondern für mehrere Längenstücke reichen kann, die von ein und demselben Materialstrang abgelängt werden sollen. Beispielsweise werden in einem Walzwerk Schienenstränge mit einer Länge von etwa 6 m hergestellt. Anschließend wird an diesen Schienensträngen ein Maßband angebracht, das sich im wesentlichen über die gesamte Länge des jeweiligen Schienenstrangs erstreckt. Dieses Maßband wird an seinen Bandenden an dem Schienenstrang fixiert und dabei im elastischen Bereich gedehnt. Wenn dann einzelne Schienenstücke von diesem auf seiner gesamten Länge mit dem Maßband versehenen Schienenstrang abgelängt werden sollen, wird das Maßband an strategisch gewählten Stellen, nämlich beidseits jeder der beabsichtigten Trennstellen, zusätzlich an dem Schienenstrang fixiert, woraufhin der Schienenstrang zusammen mit dem Maßband an den beabsichtigten Trennstellen durchtrennt wird. Das Ergebnis dieser Vorgehensweise ist, daß die abgetrennten Schienenstücke jeweils ein Maßband tragen, das an seinen beiden Bandenden an dem jeweiligen Schienenstück fixiert ist und zwischen seinen Bandenden unter elastischer Spannung steht, und daß auch der eventuell verbleibende Rest des Schienenstrangs mit einem Maßband (nämlich dem verbleibenden Rest des ursprünglichen Maßbands) versehen ist, das an seinen beiden Bandenden an dem Rest des Schienenstrangs fixiert ist und zwischen seinen Bandenden unter elastischer Spannung steht. Auf diese Weise können von einem Schienenstrang mehrere Schienenstücke abgelängt werden, wobei pro Schienenstrang nur ein einziges Mal die Prozedur der Maßbanddehnung notwendig ist.

Insbesondere wenn der verwendete Materialstrang ein Endlos-Strang ist, kann man ein Maßband verwenden, das zwar länger, insbesondere wesentlich länger, als ein einzelnes abzutrennendes Längenstück dieses Materialstrangs ist, sich jedoch nur über eine begrenzte Teillänge des Materialstrangs erstreckt.

Das Maßband wird bevorzugt durch Schweißen, insbesondere PunktSchweißen, an dem Materialstrang fixiert, beispielsweise in einem Widerstandsschweißverfahren.

Grundsätzlich ist es möglich, die Abdeckung zum Schutz des Maßbands erst dann anzubringen, nachdem die einzelnen Längenstücke von dem Materialstrang abgelängt wurden. Bei einer bevorzugten Weiterbildung des Verfahrens nach dem zweiten und dritten Aspekt der Erfindung ist jedoch vorgesehen, daß an dem Materialstrang vor dessen Durchtrennung und relativ zu diesem unbeweglich eine von dem Materialstrang und dem Maßband gesonderte, sich über die Länge des Materialabschnitts des Materialstrangs erstreckende Maßbandabdeckung angebracht wird, welche an der Trennstelle zusammen mit dem Materialstrang und dem Maßband durchtrennt wird und gewünschtenfalls vor der Durchtrennung nahe der Trennstelle an dem Materialstrang oder/und dem Maßband fixiert wird. Dies hat den folgenden Vorteil: Der Materialstrang mit dem daran angebrachten Maßband wird oftmals nicht sofort an seiner Herstellungsstätte in einzelne Längenstücke unterteilt, sondern vielmehr an einen weiterverarbeitenden Betrieb ausgeliefert, der ihn auf Lager nimmt und zu gegebener Zeit abhängig von den gewünschten Kundenapplikationen die einzelnen Längenstücke abtrennt. Wenn in dieser Zeit das Maßband ungeschützt wäre, könnten Beschädigungen des Maßbands nicht ausgeschlossen werden. Wenn jedoch an dem ungestückelten Materialstrang die Maßbandabdeckung angebracht wird, läßt sich eine frühzeitige vollkommene Einkapselung des Maßbands erzielen, die es vor späteren Einwirkungen schützt, welche beim Transport des Materialstrangs, bei dessen Lagerung oder bei dessen Weiterverarbeitung auftreten können.

Als Maßbandabdeckung kann ein Abdeckband verwendet werden, welches längs seiner in Richtung der Längsachse verlaufenden Längsränder, gewünschtenfalls im wesentlichen durchgehend, an dem Materialstrang befestigt wird. Es ist jedoch nicht ausgeschlossen, daß andere Formen der Abdeckung verwendet werden. Beispielsweise könnte das Maßband in eine Längsnut des Materialstrangs eingelegt werden, die anschließend mit einer härtbaren Abdeckmasse ausgefüllt wird.

Die Erfindung wird im folgenden anhand der beigefügten Zeichnungen näher erläutert. Es stellen dar:
- Fig. 1: schematisch im Schnitt eine Linearführungseinrichtung, bei der die verschiedenen Aspekte der Erfindung verwirklicht werden können;
- Fig. 2: einen Teil einer Führungsschiene der in Fig. 1 gezeigten Linearführungseinrichtung mit einem in eine Stufennut eingelegten und durch ein Abdeckband abgedeckten Maßband;
- Fig. 3: das Maßband der Fig. 2 in Draufsicht;
- Fig. 4 - 6: schematisch Verfahrensschritte bei der Herstellung der in Fig. 1 gezeigten Linearführungseinrichtung;
- Fig. 7: eine Variante zu Fig. 2 und
- Fig. 8: ein Detail der Führungsschiene im Bereich einer Stützstufe für das Abdeckband.

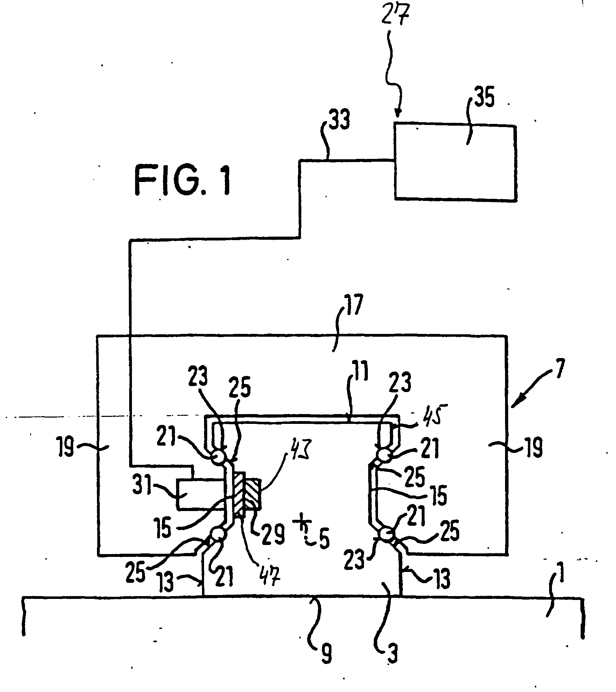

Fig. 1 zeigt eine Linearführungseinrichtung mit einer auf einer Tragbasis 1 befestigten Führungsschiene 3 und einem auf der Führungsschiene 3 entlang einer Schienenlängsachse 5 beweglich geführten Läufer 7. Die Führungsschiene 3 besitzt eine Befestigungsfläche 9, mit der sie auf der Tragbasis 1 aufliegt, eine der Befestigungsfläche 9 gegenüberliegende Kopffläche 11 sowie zwei die Befestigungsfläche 9 und die Kopffläche 11 verbindende Seitenflächen 13. Die Seitenflächen 13 der Führungsschiene 3 sind mit je einer trapezförmigen Zurückversetzung 15 versehen. Durch nicht näher dargestellte Schraubbolzen, welche in regelmäßigen Abständen längs der Schienenlängsachse 5 verteilt angeordnet sind und die Führungsschiene 3 von der Kopffläche 11 her durchsetzen, ist die Führungsschiene 3 mit der Tragbasis 1 fest verschraubt.

Der Läufer 7 umgreift die Führungsschiene 3 annähernd U-förmig, wobei er mit einem Stegbereich 17 der Kopffläche 11 der Führungsschierie 3 benachbart liegt und mit zwei durch den Stegbereich 17 verbundenen Schenkelbereichen 19 den Seitenflächen 13 der Führungsschiene 3 benachbart liegt. Der Läufer 7 ist durch an ihm gelagerte endlose Wälzkörperschleifen 21 rollend auf der Führungsschiene 3 geführt. Die Wälzkörperschleifen 21 sind in den Schenkelbereichen 19 des Läufers 7 angeordnet. Ihre Wälzkörper rollen an Laufbahnen 23 der Führungsschiene 3 ab, die in den mit 25 bezeichneten Schrägflanken der trapezförmigen Zurückversetzungen 15 ausgebildet sind. Jeder der beiden Schenkelbereiche 19 des Läufers 7 trägt jeweils zwei Wälzkörperschleifen 21, und zwar so, daß sie symmetrisch zu einer die Längsachse 5 enthaltenden Längsmittelebene der Führungsschiene 3 liegen. Bei den Wälzkörpern der Wälzkörperschleifen 21 kann es sich beispielsweise um Kugeln, Rollen, Tonnen oder Nadeln handeln.

Die Einsatzmöglichkeiten der Linearführungseinrichtung sind beliebig. Sie kann beispielsweise in Werkzeugmaschinen zur beweglichen Führung von Werkzeugen oder Werkstücken eingesetzt werden, in Handhabungsgeräten oder in Meßsystemen. In allen diesen Fällen ist es häufig erforderlich, die relative Position des Läufers 7 entlang der Führungsschiene 3 exakt zu ermitteln, beispielsweise um Bearbeitungsvorgänge an einem Werkstück präzise steuern zu können. Hierzu umfaßt die Linearführungseinrichtung eine allgemein mit 27 bezeichnete Positionsmeßeinrichtung, welche als Grundkomponenten ein an der Führungsschiene 3 gehaltenes Maßband 29 sowie einen von dem Läufer 7 getragenen Sensorkopf 31 umfaßt. Das Maßband 29 ist im wesentlichen über die gesamte Länge der Führungsschiene 3 verlegt, in jedem Fall über den gesamten Bewegungsspielraum, den der Läufer 7 in Achsrichtung der Führungsschiene 3 relativ zu dieser besitzt. Bei einer Bewegung des Läufers 7 relativ zur Führungsschiene 3 tastet der Sensorkopf 31 das Maßband 29 ab und liefert über eine Meßsignalleitung 33 entsprechende Sensorsignale an eine insbesondere mikroprozessorgestützte Auswerteschaltung 35, die anhand der gewonnenen Sensorsignale die Position des Läufers 7 längs der Führungsschiene 3 ermittelt. Der Sensorkopf 31 ist bevorzugt in unmittelbarer Gegenüberlage zu dem Maßband 29 an dem Läufer 7 angeordnet, so daß die Abtastung des Maßbands 29 durch den Sensorkopf 31 durch äußere Einflüsse, etwa externe elektromagnetische Felder, geringstmöglich gestört wird. Hierbei ist es denkbar, den Sensorkopf 31 durch spezielle Abschirmelemente gegen äußere Streufelder abzuschirmen.

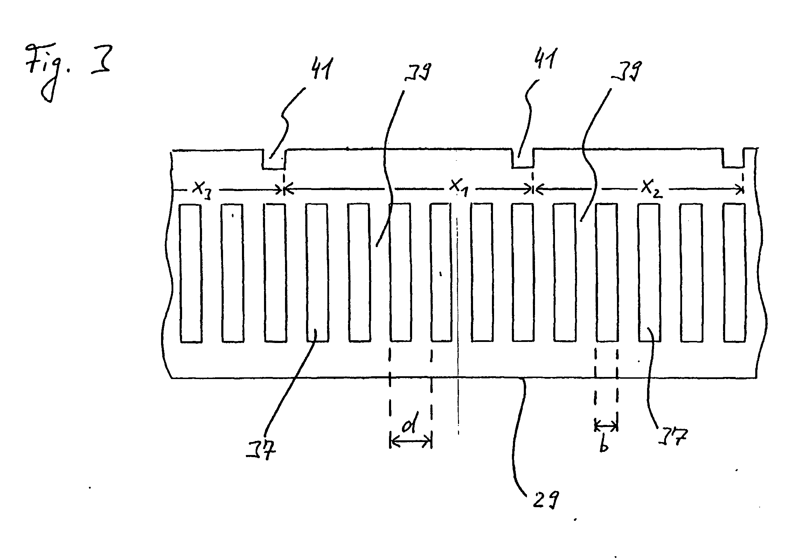

Das Maßband 29 ist ausschnittsweise in Fig. 3 gezeigt. Es weist eine Vielzahl äquidistanter Schlitze 37 auf, die in Längsrichtung des Maßbands 29 aufeinanderfolgend in das Maßband 29 eingearbeitet sind und durch Stege 39 voneinander getrennt sind. Der Abstand zweier aufeinanderfolgender Schlitze 37 entspricht der Teilung des Maßbands 29. Dieser Abstand ist in Fig. 3 mit d bezeichnet und beträgt beispielsweise 1 mm. Die mit b bezeichnete Breite der Schlitze 37 beträgt beispielsweise 0,5 mm. Die Stege 39 sind dann ebenfalls 0,5 mm breit.

Das Maßband 29 ist aus Metall gefertigt, beispielsweise aus Stahl mit einem vergleichsweise hohen Nickelgehalt. Die Stege 39 bilden dann Zonen erhöhter magnetischer Permeabilität, wohingegen die Schlitze 37 Zonen verringerter magnetischer Permeabilität bilden. Zur Abtastung des Maßbands 29 kann beispielsweise eine Feldplatte mit Magnetowiderständen verwendet werden, die durch einen Permanentmagnet magnetisch vorgespannt sind. Alternativ kann beispielsweise eine Hall-Sonde verwendet werden. Die alternierende Permeabilität des gitterartig strukturierten Maßbands 29 bewirkt periodische Schwankungen der magnetischen Flußdichte, wenn die Feldplatte oder die Hall-Sonde längs des Maßbands 29 entlangfahren. Die schwankende magnetische Flußdichte bewirkt Spannungs- oder Stromänderungen an dem sensierenden Bauteil - sei dies eine Feldplatte oder ein Hall-Sensor oder ein anderes Bauteil - des Sensorkopfs 31, die als Sensorsignale an die Auswerteschaltung 35 geliefert werden. Die Sensorsignale können eine hochfrequente sinusförmige Grundschwingung aufweisen, deren Amplitude entsprechend der schwankenden magnetischen Flußdichte moduliert wird. Die Auswerteschaltung 35 setzt diese Amplitudenschwankungen in eine Folge von Impulsen um. Die Impulse können beliebige Form besitzen. So kann der Impulszug beispielsweise Sinusform, Rechteckform oder Dreiecksform besitzen. Denkbar ist auch ein Impulszug von annähernd idealen Impulsen. Nachdem die Maßteilung, also der Abstand zweier als Maßmarkierungen dienender Schlitze 37, bekannt ist und jeder in dem Sensorsignal enthaltene Impuls einem von dem Sensorkopf 31 überfahrenen Schlitz 37 (oder Steg 39) entspricht, kann aus der Zahl der von dem Sensorkopf 31 gelieferten Impulse die Distanz bestimmt werden, die der Läufer 7 längs der Führungsschiene 3 zurückgelegt hat. Wenn die Anfangsposition des Läufers 7 bekannt ist, kann so aus der zurückgelegten Strecke die momentane Position des Läufers 7 bestimmt werden. Zweckmäßigerweise wird vor der Arbeitsaufnahme der Linearführungseinrichtung eine Referenzierung der Positionsmeßeinrichtung 27 vorgenommen, um Referenz-Meßwerte beispielsweise für die Endpositionen des Läufers 7 auf der Führungsschiene 3 oder/und für andere ausgezeichnete Positionen des Läufers 7 zu erhalten. Diese Referenz-Meßwerte dienen im Arbeitsbetrieb der Linearführungseinrichtung als Basis für die Bestimmung der aktuellen Relativposition des Läufers 7 auf der Führungsschiene 3.

Es ist denkbar, daß die angesprochenen Referenz-Meßwerte verloren gehen, beispielsweise bei einem Ausfall der Spannungsversorgung für die Positionsmeßeinrichtung 27. Um dann nicht erneut eine Referenzierung des Meßsystems durchführen zu müssen, trägt das Maßband 29 neben den Schlitzen 37, die eine erste Spur von Maßmarkierungen bilden, in einer weiteren parallelen Spur abstandscodierte Referenz-Schlitze 41, die eine schnelle Positionsbestimmung des Läufers 7 erlauben. Paarweise benachbarte dieser Referenz-Schlitze 41 haben dabei jeweils unterschiedlichen Abstand voneinander. Beispielsweise haben in Fig. 3 der linke und der mittlere Referenz-Schlitz 41 einen Abstand x₁ voneinander, wohingegen der Abstand des mittleren Schlitzes 41 vom rechten Schlitz 41 x₂ beträgt. Der linke Referenz-Schlitz 41 hat wiederum einen Abstand x₃ von dem linksseitig nächstfolgenden Referenz-Schlitz..

Die Auswerteschaltung 35 kann in den ihr zugeführten Sensorsignalen Signalimpulse, die auf das Überfahren von Referenz-Schlitzen 41 zurückzuführen sind, von Signalimpulsen unterscheiden, die auf das Überfahren von Schlitzen 37 zurückzuführen sind. Beispielsweise kann der Sensorkopf 31 hierzu zwei gesonderte Sensorelemente enthalten, deren eines die Spur von Schlitzen 37 abtastet und deren anderes die Spur von Referenz-Schlitzen 41 abtastet. Den Abstand zwischen zwei aufeinanderfolgenden Referenz-Schlitzen 41 kann die Auswerteschaltung 35 dann aus der Zahl der Signalimpulse berechnen, die bei Durchfahren der Strecke zwischen zwei aufeinanderfolgenden Referenz-Schlitzen 41 durch die Schlitze 37 hervorgerufen werden. Die von Paar zu Paar unterschiedlichen Abstände zwischen jeweils benachbarten Referenz-Schlitzen 41 sind tabellarisch in der Auswerteschaltung 35 niedergelegt. Die aktuelle Position des Läufers 7 längs der Führungsschiene 3 kann demnach dadurch bestimmt werden, daß der Läufer 7 und mit ihm der Sensorkopf 31 über zwei aufeinanderfolgende Referenz-Schlitze 41 hinweg bewegt werden, der Abstand zwischen den beiden Referenz-Schlitzen 41 berechnet wird und in der im voraus gespeicherten Tabelle nachgeschaut wird, welches Paar von Referenz-Schlitzen 41 diesen berechneten Abstand besitzt und wo diese Referenz-Schlitze 41 entlang des Maßbands 29 liegen.

Um Informationen über die Bewegungsrichtung des Läufers 7 auf der Führungsschiene 3 zu gewinnen, kann der Sensorkopf 31 zwei in Längsrichtung zueinander versetzt angeordnete Sensorelemente aufweisen, die beide die Spur von Schlitzen 37 abtasten. Die phasenversetzten Signale, die von den beiden Sensorelementen geliefert werden, erlauben dann eine Richtungsbestimmung der Läuferbewegung. Grundsätzlich ist es auch denkbar, das Maßband 29 mit zwei parallelen Spuren von Schlitzen 37 gleicher Maßteilung zu versehen, die Schlitze 37 der beiden Spuren jedoch zueinander versetzt anzuordnen. Die Abtastung der beiden Spuren kann dann mittels zweier zueinander unversetzter Sensorelemente erfolgen.

Im Rahmen der Erfindung ist es grundsätzlich auch denkbar, Längsoder/und Winkelpositionen eines Drehkörpers zu erfassen. In diesem Fall kann ein Maßband mit einer oder mehren Spuren von Maßmarkierungen längs eines Kreisbogens oder längs einer Spirallinie an dem Drehkörper angebracht werden. Bei geeigneter Vervielfachung der Spuren könnte beispielsweise die jeweilige Spur als Winkelmaß herangezogen werden; die einzelnen Maßmarkierungen der jeweiligen Spur würden zur Positionsermittlung in Längsrichtung verwendet werden. Dieses Prinzip kann auch für den Fall angewendet werden, daß sich ein Sensorkopf relativ zu einer Planfläche in zwei zueinander orthogonalen Bewegungsrichtungen bewegen kann.

Bei entsprechender Ausbildung der Sensorik und der nachgeschalteten Rechnerstufe sind statt der periodischen Anordnung der Schlitze 37 auch aperiodische Muster der Schlitze 37 denkbar, beispielsweise wenn in bestimmten Längsabschnitten eine höhere Auflösung verlangt wird als in anderen Längsabschnitten.

Grundsätzlich sind beliebige Markierungsfolgen oder -profile denkbar, die vom Fachmann von Fall zu Fall bestimmt werden können.

Das Maßband 29 soll während der Lebensdauer der Linearführungseinrichtung möglichst nicht ausgetauscht werden müssen. Da jedoch insbesondere in Werkzeugmaschinen sehr rauhe Arbeitsbedingungen herrschen können, ist es wünschenswert, das Maßband 29 absolut geschützt an der Führungsschiene 3 unterzubringen, und zwar geschützt vor mechanischer Einwirkung, wie Stößen oder Schlägen, vor Einwirkung von Kühlmitteln und Schmiermitteln, vor Einwirkung sonstiger aggressiver Chemikalien und gewünschtenfalls auch vor Einwirkung von äußeren Feldern, beispielsweise Magnetfeldern, die von einem Linearmotor hervorgerufen werden. Des weiteren ist es wünschenswert, das Maßband 29 so an der Führungsschiene 3 anzubringen, daß bei Rüttel- oder Schwingbelastungen der Linearführungseinrichtung kein Verrutschen des Maßbands 29 oder gar ein Ablösen desselben zu befürchten ist.

Bei der in Fig. 1 gezeigten Linearführungseinrichtung ist das Maßband 29 in einer in Richtung der Längsachse 5 verlaufenden Längsnut 43 untergebracht, die einen Aufnahmekanal für das Maßband 29 bildet und in der mit 45 bezeichneten Außenoberfläche der Führungsschiene ausgebildet ist. Die Längsnut 43 ist bevorzugt in einer der Seitenflächen 13 zwischen deren Laufbahnen 23 vorgesehen, und zwar insbesondere am Grund der trapezförmigen Zurückversetzung 15 dieser Seitenfläche 13. Als Alternative ist es denkbar, eine solche Längsnut 43 in die Kopffläche 11 der Führungsschiene 3 oder in die Tragbasis 1 einzuarbeiten und das Maßband 29 darin einzulassen.

Das Maßband 29 ist vollständig in der Längsnut 43 versenkt. Zum Schutz des Maßbands 29 ist ein Abdeckband 47 vorgesehen, welches das Maßband 29 in der Längsnut 43 vollständig einkapselt. Es schützt das Maßband 29 vor den zuvor aufgezählten möglichen äußeren Einflüssen. Die Abtastung des Maßbands 29 durch den Sensorkopf 31 wird durch das Abdeckband 47 nicht behindert. Das Abdeckband 47 besteht bevorzugt aus Metall; beispielsweise kann das Abdeckband 47 von einer etwa 0,1 mm dicken Metallfolie gebildet sein. Sofern die magnetische Permeabilität des metallischen Abdeckbands 47 überall gleich ist, wird die Abtastung alternierender magnetischer Permeabilitäten des Maßbands 29 dann durch das Abdeckband 47 nicht gestört.

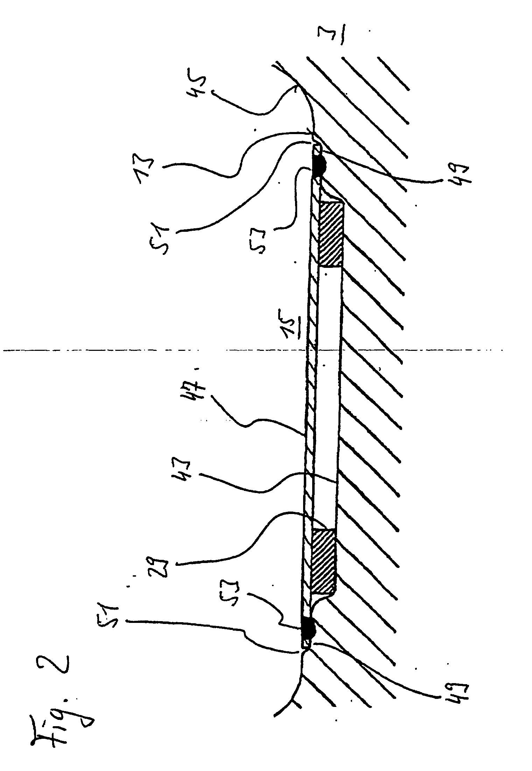

Es wird nun auf die Fig. 2 verwiesen. Das Maßband 29 liegt flach am Nutgrund der Längsnut 43 auf. Es ist, wie später noch erläutert wird, lediglich an seinen Bandenden an der Führungsschiene 3 fixiert, nämlich durch Schweißen. Gegebenenfalls kann es so in die Längsnut 43 eingedrückt sein, daß es zwischen seinen Bandenden durch reibschlüssigen Halt an den Flanken der Längsnut 43 gegen Abheben von der Führungsschiene 3 gesichert ist. Dies kann insbesondere dann der Fall sein, wenn das Abdeckband 47 nicht unmittelbar auf dem Maßband 29 aufliegt, sondern zwischen diesen beiden Bändern ein geringer Abstand besteht.

Das Abdeckband 47 ragt - bei Betrachtung quer zu seiner Längsrichtung - beidseits über das Maßband 29 hinaus und liegt mit seinen beiden über das Mäßband 29 hinausragenden seitlichen Randabschnitten auf je einer Stützstufe 49 auf, die in der jeweiligen Nutflanke der Längsnut 43 ausgebildet ist. Die Stützstufen 49 bilden somit Auflageflächen für das Abdeckband 47. Die Stützstufen 49 in der Längsnut 43 sind so gestaltet und bemessen, daß ein zumindest annähernd bündiger Übergang zu den angrenzenden Oberflächenbereichen der Führungsschiene 3 besteht. Wenn hier nur von einem annähernd bündigen Übergang gesprochen wird, so soll dabei berücksichtigt sein, daß zwischen den schmalseitigen Längsrändern des Abdeckbands 47 und den seitlichen Flanken der Längsnut 43 gelegentlich ein geringer Spalt nicht vermieden werden kann. Dieser Spalt ist in Fig. 2 an beiden Seitenrändern des Abdeckbands 47 bei 51 erkennbar. Er kann daraus entstehen, daß die Längsnut 43 herstellungsbedingt keine scharfkantigen Stufenübergänge aufweist, sondern nur gerundete Stufenübergänge, was beispielsweise dann der Fall ist, wenn die Längsnut 43 mittels einer Schleifscheibe in die Führungsschiene 3 eingearbeitet wird. Zwar werden die Spalte 51 in der Regel so klein sein, daß sie sich auf die Abdichtung des Läufers 7 gegenüber der Führungsschiene 3 - wenn überhaupt - nur in vernachlässigbarer Weise auswirken. Allerdings können diese Spalte 51 in anderer Hinsicht störend sein: Um das Maßband 29 hermetisch gegenüber der Außenumgebung abzudichten, wird das Abdeckband 47 längs jedes seiner beiden Seitenränder mit der Führungsschiene 3 verschweißt. Entsprechende Schweißnähte sind in Fig. 2 mit 53 bezeichnet. Als Schweißmethode wird bevorzugt Laser-Schweißen angewendet. Grundsätzlich ist es auch denkbar, Elektronenstrahl-Schweißen oder Plasma-Schweißen anzuwenden. Würde nun eine Stumpfstoß-Verschweißung des Abdeckbands 47 mit der Führungsschiene 3 versucht werden, also eine Verschweißung dort, wo die Schmalseiten des Abdeckbands 47 stumpf an die seitlichen Flanken der Längsnut 43 anstoßen, könnten die Spalte 51 das Schweißergebnis negativ beeinflussen. Maßtoleranzen des Abdeckbands 47 und der Längsnut 43 könnten zudem zu einer variierenden Spaltgröße der Spalte 51 längs der Führungsschiene 3 führen. Dies hätte auch ein längs der Führungsschiene 3 stark unterschiedliches Schweißergebnis zur Folge. Aus diesem Grund wird bevorzugt nicht unmittelbar an den Seitenrändern des Abdeckbands 47, sondern etwas zur Bandmitte hin versetzt geschweißt. Die Schweißung erfolgt demnach so, daß eine Materialverschmelzung des Abdeckbands 47 mit der Führungsschiene 3 im Bereich der von den Stützstufen 49 gebildeten Auflageflächen für das Abdeckband 47 stattfindet. Es wird also durch das Abdeckband 47 hindurch geschweißt. Das Ergebnis dieser Schweißmethode erkennt man in Fig. 2. Die Schweißnähte 53 verlaufen im Abstand von ihrem jeweils benachbarten Seitenrand des Abdeckbands 47. Unmittelbar an den Seitenrändern des Abdeckbands 47 ist im wesentlichen keine Materialschmelzung des Abdeckbands 47 und insbesondere auch keine Materialverschmelzung des Abdeckbands 47 mit der Führungsschiene 3 zu beobachten. Als Zahlenbeispiel kann bei einer Bandbreite des Abdeckbands 47 von etwa 6,9 mm und einer Breite der Schweißnähte 53 von jeweils etwa 0,3 mm der Abstand vom Zentrum einer Schweißnaht 53 bis zum benachbarten Seitenrand des Abdeckbands 47 etwa 0,4 mm betragen.

Das Laser-Schweißen erweist sich hierbei als besonders geeignet, weil es sehr kleine Schmelzzonen ermöglicht und so die Schweißnähte 53 mit guter Präzision angebracht werden können. Auswirkungen auf das Maßband 29 und dessen Maßmarkierungen hat die Versetzung der Schweißnähte 53 zur Mitte des Abdeckbands 47 hin im wesentlichen nicht, weil der Wärmeeinflußbereich speziell beim Laser-Schweißen so klein ist, daß nicht mit der Gefahr einer Beeinflussung der Genauigkeit der Maßmarkierungen durch die beim Schweißen entstehende Hitze gerechnet werden muß.

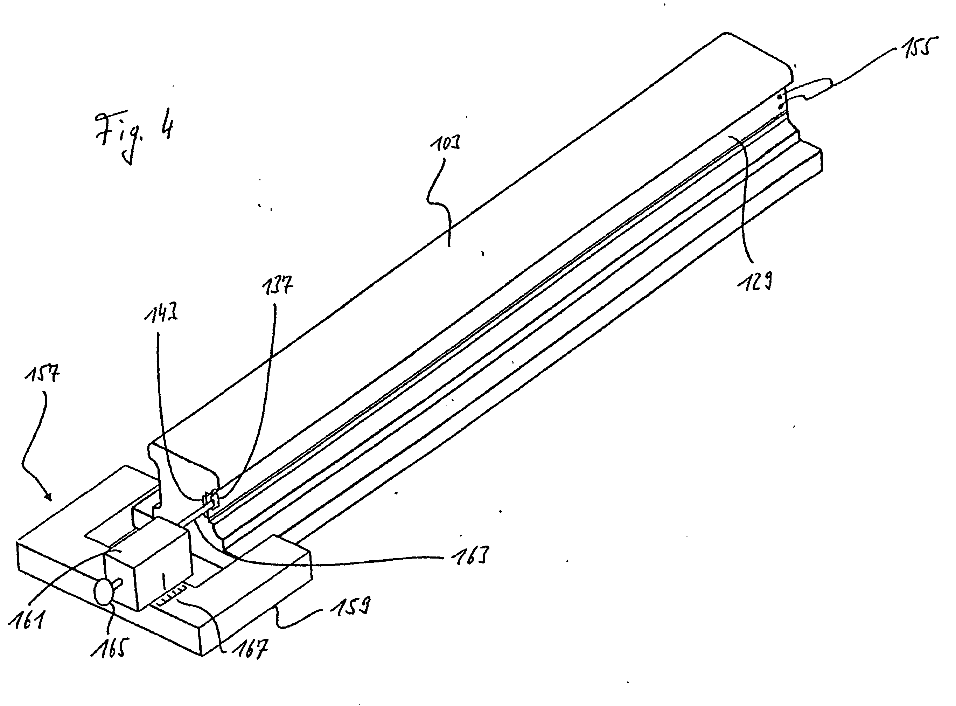

Es wird nun auf die Fig. 4 - 6 verwiesen. Soweit es sich um gleiche oder gleichwirkende Komponenten wie in den Fig. 1 - 3 handelt, werden dort gleiche Bezugszeichen verwendet, jedoch erhöht um die Zahl 100. Soweit sich aus den nachstehenden Erläuterungen nichts anderes ergibt, wird zur Beschreibung dieser Komponenten auf die vorangehenden Ausführungen zu den Fig. 1 - 3 verwiesen.

Die Führungsschiene 3 der Linearführungseinrichtung gemäß Fig. 1 wird in der Regel mit einer für die jeweilige Applikation gewünschten Länge von einem Schienenstrang abgelängt, der mit einer Standardlänge, beispielsweise etwa 6 m, oder als Endlos-Strang durch Walzen, Stranggießen oder Strangpressen hergestellt wird. Ein solcher Schienenstrang ist in Fig. 4 gezeigt. Er ist dort mit 103 bezeichnet. Dieser Schienenstrang 103 wird nun, bevor er in einzelne Schienenstücke unterteilt wird, im wesentlichen auf seiner gesamten Länge mit einem Maßband 129 versehen. Dieses wird an einem seiner Bandenden an dem Schienenstrang 103 fixiert, bevorzugt durch Widerstands-Punktschweißen. Hierzu sind in Fig. 4 Schweißpunkte 155 angedeutet. Das Maßband, das in eine Längsnut 143 des Schienenstrangs 103 eingelegt wird, wird nun nicht bloß so gestrafft, daß es im wesentlichen glatt in der Längsnut 143 liegt. Vielmehr wird es mittels einer Dehnvorrichtung 157 elastisch gedehnt, bevor es auch an seinem anderen Bandende an dem Schienenstrang 103 fixiert wird. Die stark schematisch dargestellte Dehnvorrichtung 157 kann einen an dem Schienenstrang 103 festklemmbaren Klemmteil 159 und einen relativ zu dem Klemmteil 159 verstellbaren Aktivteil 161 umfassen, welcher mittels eines Greifers 163 an dem Maßband 129 angreifen kann. Beispielsweise kann der Greifer 163 in einen als Maßmarkierung des Maßbands 129 dienenden Schlitz 137 eingreifen. Zur Verstellung des Aktivteils 161 relativ zu dem Klemmteil 159 kann beispielsweise eine Mikrometerschraube 165 vorgesehen sein. Das Verstellmaß kann beispielsweise an einer Skalenanordnung 167 abgelesen werden. Nachdem durch Betätigung der Mikrometerschraube 165 die gewünschte Dehnung des Maßbands 129, beispielsweise etwa 70 - 100 µm pro Längenmeter, herbeigeführt ist, wird das Maßband 129 auch an seinem den Schweißpunkten 155 gegenüberliegenden Bandende an dem Schienenstrang 103 fixiert, bevorzugt wiederum durch Punktschweißen. Zwischen seinen Bandenden ist das Maßband 129 dann unter einer elastischen Dehnvorspannung gehalten, durch die etwaige Welligkeiten des Maßbands 129 eliminiert werden, die auftreten können, wenn für das Maßband 129 ein von einer Vorratsrolle abgewickeltes Bandmaterial verwendet wird. Eine weitere Fixierung des Maßbands 129 an dem Schienenstrang 103 zwischen den endseitigen Punktschweißungen erfolgt zunächst nicht.

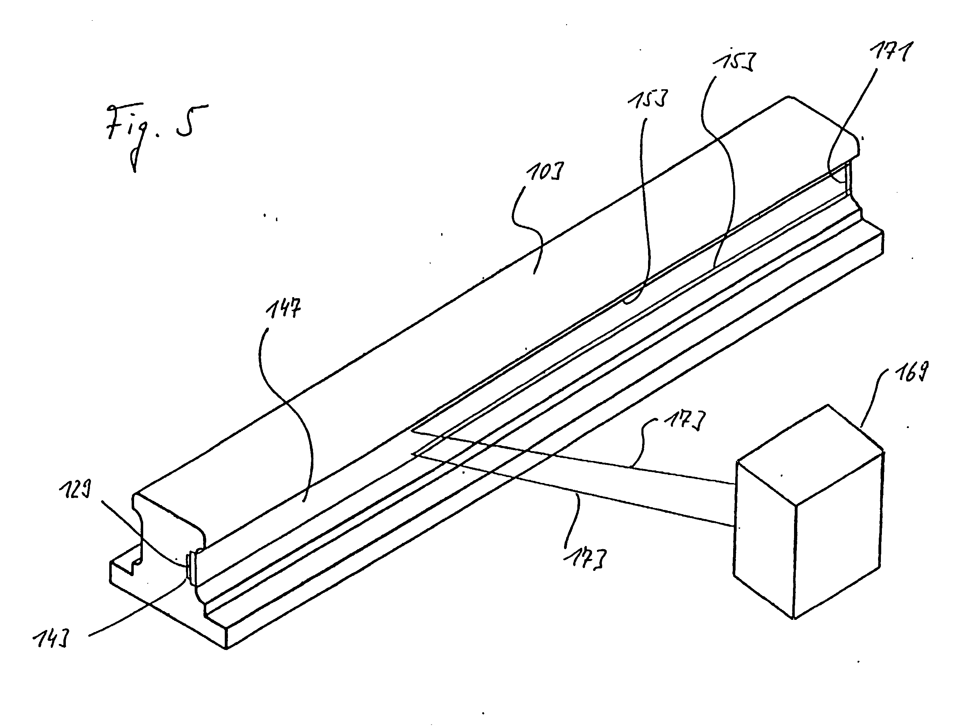

Sodann wird das Maßband 129 durch ein Abdeckband 147 abgedeckt, welches im wesentlichen über die gesamte Länge des Schienenstrangs 103 in die Längsnut 143 eingelegt wird und mit dem Schienenstrang 103 verschweißt wird. Diese Situation ist in Fig. 5 gezeigt. Zur Verschweißung des Abdeckbands 147 mit dem Schienenstrang 103 wird entlang der beiden längsverlaufenden Seitenränder des Abdeckbands 147 in geringem Abstand von diesen je eine Längsschweißnaht 153 mittels einer schematisch angedeuteten Schweißvorrichtung 169 angebracht. Die Längsschweißnähte 153 werden zeitgleich von einem Bandende des Abdeckbands 147 her angebracht, was Gewähr für geringstmögliche Verformungen des Abdeckbands 147 beim Schweißen bietet. Die Längsschweißnähte 153 erstrecken sich unterbrechungsfrei im wesentlichen über die gesamte Länge des Abdeckbands 147. An den Bandenden des Abdeckbands 147 kann zusätzlich eine Querschweißnaht 171 angebracht werden, um eine vollständige Kapselung des Maßbands 129 unter dem Abdeckband 147 herzustellen.

Die Schweißvorrichtung 169 ist bevorzugt ein Laser-Schweißgerät mit einer Bifokaloptik, die zwei intensitätsgleiche Laser-Strahlen 173 abgibt. Auch hier ist es aber wiederum nicht ausgeschlossen, auf alternative Schweißverfahren zurückzugreifen, beispielsweise auf Elektronenstrahl-Schweißen.

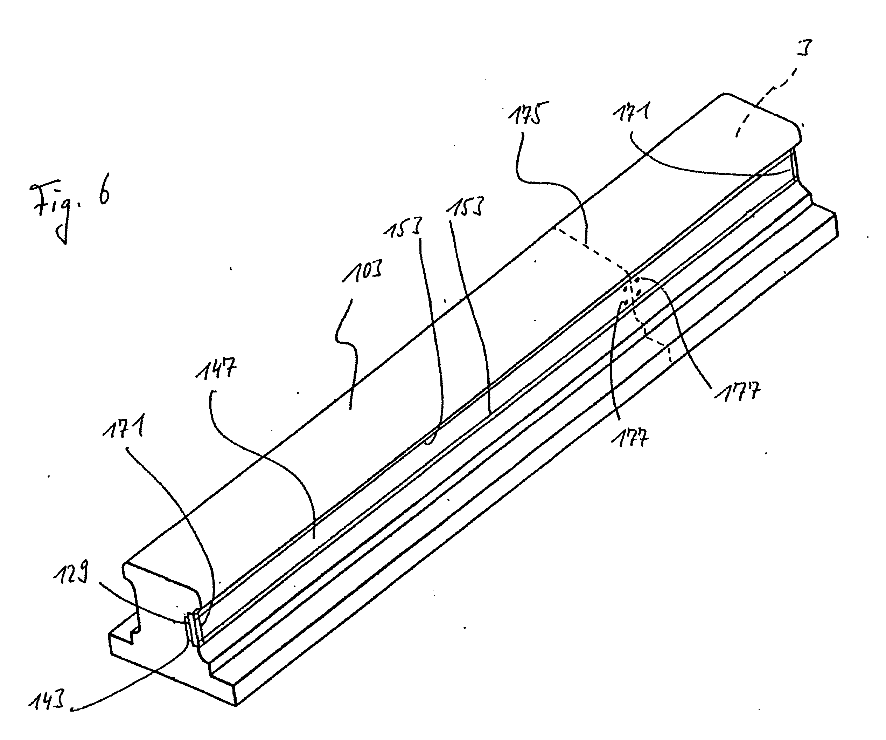

Fig. 6 zeigt den Zustand, in dem das Abdeckband 147 vollständig an dem Schienenstrang 103 angebracht ist. Das Maßband 129 liegt dann unverrückbar in der Längsnut 143. Von dem so vorbereiteten Schienenstrang 103 können nun je nach Kundenwunsch einzelne Schienenstücke mit abgedecktem Maßband abgelängt werden. Eine beabsichtigte Trennstelle ist in Fig. 6 durch eine gestrichelte Linie 175 angedeutet. Durch sie soll beispielsweise das bei der Linearführungseinrichtung der Fig. 1 verwendete Schienenstück 3 von dem Schienenstrang 103 abgetrennt werden. Bevor nun der Schienenstrang 103 an der Trennstelle 175 durchtrennt wird, wird das Maßband 129 beidseits der Trennstelle 175 lokal an dem Schienenstrang 103 fixiert. Hierzu werden in Längsrichtung des Schienenstrangs 103 rechts und links von der Trennstelle 175 Schweißpunkte 177 gesetzt, welche durch das Abdeckband 147 hindurchgehen und eine punktuelle Verschweißung des Maßbands 129 mit dem Schienenstrang 103 bewirken. Diese trennstellennahe Verschweißung des Maßbands 129 mit dem Schienenstrang 103 erlaubt danach eine Abtrennung des Schienenstücks 3, ohne daß dabei der Zustand elastischer Dehnung des Maßbands verloren geht. Vielmehr bilden die Schweißpunkte 177 nach der Abtrennung des Schienenstücks 3 endseitige Fixationsstellen für den an dem gekürzten Schienenstrang 103 verbleibenden Rest des Maßbands 129 bzw. für den dem abgetrennten Schienenstück 3 zugehörigen Teil des Maßbands 129. Sowohl an dem abgetrennten Schienenstück 3 als auch an dem gekürzten Schienenstrang 103 steht der jeweils zugehörige Abschnitt des Maßbands 129 weiter unter elastischer Dehnvorspannung. Nachdem das Schienenstück 3 abgetrennt wurde, kann an den Schweißpunkten 177 durch Querschweißen, ähnlich wie bei den Querschweißnähten 171, eine vollständige Abdichtung des jeweiligen Maßbandabschnitts erzielt werden.

Wenn das Maßband 129 an dem Schienenstrang 103 unter elastischer Dehnung angebracht wird, können die Maßmarkierungen, also beispielsweise die Schlitze 37 und die Referenzschlitze 41 gemäß Fig. 3, bereits an dem Maßband 129 vorhanden sein. Es ist aber nicht ausgeschlossen, die Maßmarkierungen erst dann in das Maßband 129 einzuarbeiten, nachdem das Maßband 129 an dem Schienenstrang 103 angebracht wurde.

Falls das Maßband 129 bereits vor seiner Anbringung an dem Schienenstrang 103 mit den Maßmarkierungen versehen wird, so ist es denkbar, das Maßband 129 elastisch gedehnt in eine geeignete Einspannvorrichtung einzuspannen und die Maßmarkierungen mit der gewünschten Soll-Teilung, die sie im Endmontagezustand besitzen sollen, an dem Maßband 129 auszubilden. Alternativ können die Maßmarkierungen am ungedehnten Maßband ausgebildet werden. In diesem Fall wird man die Maßmarkierungen mit einer sogenannten Minus-Teilung an dem Maßband anbringen. Minus-Teilung heißt dabei, daß die Maßmarkierungen vorsätzlich in einem gegenseitigen Abstand an dem Maßband angebracht werden, der kleiner als ein gewünschter Soll-Abstand im Endmontagezustand, also im gedehnten Zustand, des Maßbands ist.

Falls der letztere Weg gewählt wird, kann die Minus-Teilung insbesondere so groß gewählt werden, daß auch unter Berücksichtigung der Fertigungstoleranzen, die bei der Anbringung der Maßmarkierungen im Regelfall unvermeidbar sind, in jedem Fall noch eine Dehnung des Maßbands erforderlich ist, um das gewünschte Echtmaß der Teilung zu erhalten. Obwohl Verfahren zur Verfügung stehen, um die Maßmarkierungen mit vergleichsweise hoher Präzision an dem Maßband anzubringen, können dennoch Abstandstoleranzen zwischen den Maßmarkierungen auftreten. Wenn man nur einige wenige aufeinanderfolgende Maßmarkierungen betrachtet, so ist es durchaus denkbar, daß diese Abstandstoleranzen in einer unkritischen Größenordnung liegen. Wenn man jedoch ein mehrere Meter langes Maßband betrachtet, das auf seiner gesamten Länge mit vielen tausend Maßmarkierungen versehen wird, so tritt im theoretisch ungünstigsten Fall eine Aufaddierung aller Abstandstoleranzen zwischen jeweils zwei aufeinanderfolgenden Maßmarkierungen auf. Dies kann zur Folge haben, daß zwar eine erste Maßmarkierung auf dem Maßband im wesentlichen exakt an der gewünschten Stelle angeordnet ist, eine im Abstand von mehreren Metern angeordnete letzte Maßmarkierung auf dem Maßband jedoch bereits um ein solches Stück gegenüber seiner gewünschten Soll-Position versetzt ist, daß im Meßbetrieb ein erheblicher Meßfehler zu befürchten ist. Wenn dagegen die Maßmarkierungen vorsätzlich mit Minus-Teilung an dem Maßband angebracht werden und diese Minus-Teilung später durch elastische Dehnung des Maßbands ausgeglichen wird, so kann am Endprodukt eine sehr hohe Genauigkeit des durch die Maßmarkierungen repräsentierten Maßstabs erzielt werden. Um ein numerisches Beispiel zu geben, können die Schlitze 37 gemäß Fig. 3 statt mit dem gewünschten Teilungsabstand von 1 mm mit einem Teilungsabstand von 0,999 mm an dem ungedehnten Maßband angebracht werden. Der Teilungsabstand wird demnach bewußt um 1 µm zu kurz gewählt. Es hat sich gezeigt, daß dann eine Dehnung im Bereich von 70 - 100 µm häufig genügt, um zwischen paarweise aufeinanderfolgenden Schlitzen im Durchschnitt den gewünschten Teilungsabstand von 1 mm zu erhalten und darüber hinaus das Ergebnis zu erzielen, daß der erste Schlitz in dem Maßband im wesentlichen exakt den gewünschten Soll-Abstand vom letzten Schlitz im Maßband aufweist.

Um wieviel das Maßband bei seiner Anbringung an dem Schienenstrang gedehnt werden muß, kann in Form eines festgelegten Dehnungsbetrags vorgegeben sein, der auf empirische Weise ermittelt wurde. Denkbar ist es auch, Werte für die Kraft vorzugeben, mit denen an dem Maßband gezogen werden muß, um es zu dehnen. Bevorzugt wird das Maßband jedoch um einen einzelfallabhängigen Betrag gedehnt. Dies kann in der Weise geschehen, daß die Dehnung des Maßbands in einer Meßbank erfolgt, welche ein geeichtes Referenz-Meßsystem aufweist, mit dessen Daten die Meßwerte verglichen werden können, die bei dem an dem Schienenstrang anzubringenden, zu dehnenden Maßband gewonnen werden. Auf dieser Meßbank kann der Schienenstrang eingespannt werden. Das Maßband, das entsprechend Fig. 4 an einem Bandende an dem Schienenstrang fixiert ist, wird an seinem anderen, freien Bandende von einer Dehnvorrichtung der Meßbank erfaßt und zunächst "auf Anschlag" gespannt, so daß es straff ist, aber noch nicht im elastischen Bereich gedehnt ist.

Das Referenz-Meßsystem umfaßt einen geeichten Referenz-Maßstab und einen Referenz-Meßkopf, der den Referenz-Maßstab abfahren kann. Mit dem Referenz-Meßkopf ist ein zweiter Meßkopf kombiniert, der das an dem Schienenstrang zu montierende Maßband abfährt. Der Referenz-Meßkopf fährt jeweils eine vorgegebene Strecke entlang des Schienenstrangs ab. Das Referenz-Meßsystem liefert einen Wert für die zurückgelegte Strecke, der der tatsächlichen Streckenlänge entspricht. Gleichzeitig tastet der zweite Meßkopf die Maßmarkierungen des an dem Schienenstrang gehaltenen Maßbands ab. Die dabei entstehenden Impulse werden gezählt. Der so ermittelte Ist-Zählwert wird mit einem Soll-Zählwert verglichen, der erhalten werden müßte, wenn die Maßmarkierungen bereits den richtigen Teilungsabstand hätten. Der Soll-Zählwert ergibt sich aus der Streckenlänge der von dem Referenz-Meßkopf zurückgelegten Strecke und aus dem gewünschten Echtmaß des Teilungsabstands der Maßmarkierungen des an dem Schienenstrang anzubringenden Maßbands.

Wenn anfangs das Maßband noch ungedehnt ist und seine Maßmarkierungen mit Minus-Teilung angebracht wurden, ist der ermittelte Ist-Zählwert größer als der Soll-Zählwert, da aufgrund des zu geringen Teilungsabstands der Maßmarkierungen mehr Maßmarkierungen auf der von dem Referenz-Meßkopf zurückgelegten Strecke enthalten sind als dann, wenn die Maßmarkierungen den Soll-Teilungsabstand haben. Indem das Maßband immer wieder um ein bestimmtes Stück stärker gedehnt wird und das Ergebnis dieser Dehnung sofort mit dem Referenz-Meßsystem nachgeprüft wird, kann in einer iterativen Vorgehensweise der Soll-Zustand für das Maßband angenähert werden.

Die auf vorstehende Weise erzielte Präzision des Maßbands bleibt erhalten, wenn von dem Schienenstrang zu einem späteren Zeitpunkt einzelne Schienenstücke abgetrennt werden, da ja zuvor beidseits der Trennstelle das Maßband an dem Schienenstrang fixiert wird. Um eine Mehrzahl von Schienenstücken bereitzustellen, von denen jedes ein mit hoher Präzision verlegtes Maßband trägt, genügt es demnach, die zuvor beschriebene Dehn-Meß-Prozedur einmal an dem ungekürzten Schienenstrang durchzuführen. Dies senkt den Zeit- und Verfahrensaufwand erheblich.

Nach der obigen Dehn-Meß-Prozedur könnte das Maßband sogar auf seiner gesamten Länge durchgehend an dem Schienenstrang, oder allgemein dem Träger, befestigt werden.

Um die Schlitze 37,41 gemäß Fig. 3 an dem Maßband 29 anzubringen, wird bevorzugt auf eine Fotolacktechnik zurückgegriffen. Dabei wird ein beispielsweise etwa 0,3 m dickes Endlos-Metallband von einer Vorratsrolle abgewickelt und gewünschtenfalls nach Durchlaufen einer Begradigungs- oder Glättungsstation in eine Fotobehandlungsstation transportiert. In dieser Fotobehandlungsstation wird jeweils nur ein vergleichsweise kurzer Abschnitt des Metallbands mit dem Ziel der Ausbildung von Schlitzen behandelt. So ein Abschnitt kann beispielsweise etwa 10 cm lang sein. Das Metallband wird demnach schubweise durch die Fotobehandlungsstation und gegebenenfalls weitere vor- und nachgeschaltete Stationen transportiert. Zum Weitertransport, Abbremsen und Straffhalten des Metallbands können geeignete Greif- und Bremsmechanismen vorgesehen sein, wie es auf dem Gebiet der Bearbeitung von Bandmaterial an sich bekannt ist.

In der Fotobehandlungsstation wird auf den jeweils zu behandelnden Abschnitt des Metallbands - nach gründlicher Reinigung und Trocknung - eine Schicht eines Fotolacks aufgebracht, der durch eine Fotomaske hindurch belichtet wird. Die Fotomaske enthält ein Schlitzmuster, das dem Muster der Schlitze 37,41 gemäß Fig. 3 entspricht. Nach geeigneter Zwischenbearbeitung des belichteten Fotolacks, insbesondere einer Entwicklung, verbleibt auf dem zu behandelnden Abschnitt des Metallbands ein Lackmuster, das dort Freistellen besitzt, wo die Schlitze 37,41 entstehen sollen. Der zu behandelnde Abschnitt des Metallbands wird dann in ein Ätzbad getaucht, dessen Ätzlösung an den lackfreien Stellen die Schlitze 37,41 in das Material des Metallbands hineinätzt. Nach Durchlaufen des Ätzbads wird das Metallband wiederum gründlich gereinigt und der Weiterverarbeitung zugeführt. Das mit den Schlitzen 37,41 versehene Metallband kann beispielsweise wieder auf eine Vorratsrolle aufgewickelt werden.

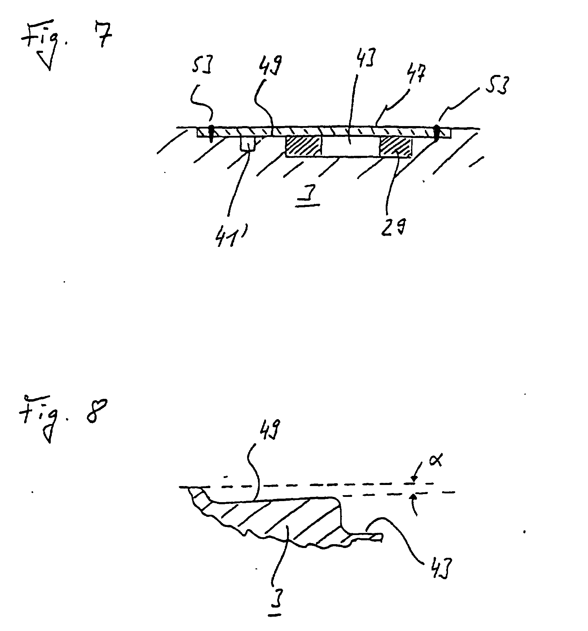

Bei dem in Fig. 3 gezeigten Maßband 29 sind die Referenzschlitze 41 in einer parallelen Spur zu den Schlitzen 37 in das Maßband 29 eingearbeitet. Besonders bei sehr kleinformatigen Führungsschienen kann der Fall vorkommen, daß das Maßband nicht breit genug ist, um die Referenzschlitze 41 in hinreichendem Abstand von den Schlitzen 37 anzubringen. Falls die Schlitze 37 und die Referenzschlitze 41 - in Breitenrichtung des Maßbands - zu eng beieinander liegen würden, könnten sich die von den Schlitzen 37 herrührenden Sensorsignale mit den von den Referenzschlitzen 41 herrührenden Sensorsignalen überlagern, so daß die Auswerteschaltung 35 nicht mehr exakt unterscheiden kann, ob ein Signalimpuls durch das Überfahren eines Schlitzes 37 oder durch das Überfahren eines Referenzschlitzes 41 hervorgerufen wurde. Dies kann die Funktionsfähigkeit der Positionsmeßeinrichtung beeinträchtigen. Für solche Fälle, in denen auf dem Maßband nicht ausreichend Platz zur Verfügung steht, um zwei oder mehr Spuren von Schlitzen parallel nebeneinander anzubringen, eignet sich deshalb die Variante der Fig. 7. Dort ist eine der Stützstufen 49 der Längsnut 43 verbreitert. Diese Verbreiterung stellt Platz für Referenzbohrungen 41' bereit, die direkt in die Führungsschiene 3 gebohrt werden. Die Referenzbohrungen 41' rufen in ähnlicher Weise wie die Schlitze 37,41 Flußdichteschwankungen des von der Sensorik abgestrahlten Magnetfelds hervor. Sie lassen sich damit genauso gut detektieren wie die Schlitze 37,41. Die Referenzbohrungen 41', die beispielsweise mit einem Durchmesser von 0,6 mm gebohrt werden, ersetzen die Referenzschlitze 41. Das Maßband 29 trägt dann nur noch die Schlitze 37 und kann entsprechend schmal gehalten werden. Da sie durch das Abdeckband 47 abgedeckt sind, sind die Referenzbohrungen 41' vor Verschmutzung und Beschädigung geschützt.

Gelegentlich wird angestrebt, einen Zwischenraum zwischen dem Maßband und dem Abdeckband zu vermeiden; das Abdeckband soll auf dem Maßband aufliegen, ohne daß eine feste Verbindung zwischen den beiden Bändern besteht. Dabei kann folgendes Problem auftreten: Beim Anschweißen sollte das Abdeckband in die Längsnut der Führungsschiene hineingedrückt werden, um Schweißfehler zu vermeiden. Hierzu kann die verwendete Schweißvorrichtung einen Niederdrücker aufweisen, der der aktuellen Schweißstelle etwas vorauseilt. Es hat sich nun gezeigt, daß dieser Niederdrücker eine nachteilige Wirkung auf das Maßband haben kann insofern, als durch das Niederdrücken des Abdeckbands auch das ohne Zwischenraum unter dem Abdeckband liegende Maßband einer mechanischen Druckeinwirkung ausgesetzt werden kann. Diese Druckeinwirkung kann zu Verformungen des Maßbands führen, die nicht in jedem Fall wieder verschwinden. Letztendlich besteht somit die Gefahr, daß durch das Niederdrücken des Abdeckbands Ungenauigkeiten des Maßbands hervorgerufen werden.

Die vorstehende Problematik kann dadurch umgangen werden, daß die Stützstufen 49 der Längsnut 43 geringfügig abgeschrägt werden. Dies ist in Fig. 8 gezeigt. Man erkennt dort, daß die von der Stützstufe 49 gebildete Auflagefläche zur Nutaußenseite hin geringfügig abfällt, beispielsweise um einen Winkel α von etwa 2°. Wenn das Abdeckband gegen eine derart abgeschrägte Stützstufe gedrückt wird, wölbt es sich etwas, was dazu führt, daß es sich geringfügig von dem darunter liegenden Maßband abhebt. Das Maßband wird so vor mechanischer Druckeinwirkung geschützt. Die angesprochenen Verformungsprobleme treten nicht mehr auf.

## Patentansprüche

1. Einrichtung zur Ermittlung der Relativposition zweier relativ zueinander beweglicher Körper (3,7), wobei ein erster (3) der beiden Körper (3,7) über einen Markierungsbereich verteilt Maßmarkierungen (37,41) trägt und der zweite (7) der beiden Körper (3,7) eine auf die Maßmarkierungen (37,41) ansprechende Sensoranordnung (31) trägt, welche im Zuge einer Relativbewegung der beiden Körper (3,7) den Markierungsbereich befährt, wobei die Maßmarkierungen (37,41) durch ein von dem ersten Körper (3) gesondertes Abdeckband (47) abgedeckt sind, welches mit seiner dem ersten Körper zugewandten Flachseite auf Auflageflächen (bei 49) des ersten Körpers (3) aufliegt und längs seiner beiden in Bandlängsrichtung verlaufenden Längsränder durch je mindestens eine Längsschweißnaht (53) an dem ersten Körper (3) befestigt ist,
**dadurch gekennzeichnet, daß** die Längsschweißnähte (53) quer zur Bandlängsrichtung im Abstand vom jeweils benachbarten Längsrand des Abdeckbands (47) verlaufen und im Bereich der Auflageflächen (bei 49) eine Materialverschmelzungszone des Abdeckbands (47) mit dem ersten Körper (3) bilden.

2. Einrichtung nach Anspruch 1,
**dadurch gekennzeichnet, daß** die Maßmarkierungen (37,41) in einer reliefartigen Vertiefung (43) des ersten Körpers (3) versenkt angeordnet sind und das Abdeckband (47) in die reliefartige Vertiefung (43) eingelegt ist.

3. Einrichtung nach Anspruch 2,
**dadurch gekennzeichnet, daß** das Abdeckband (47) derart in die reliefartige Vertiefung (43) eingelegt ist, daß die Außenoberfläche des Abdeckbands (47) annähernd bündig mit angrenzenden Oberflächenbereichen (45) des ersten Körpers (3) liegt.

4. Einrichtung nach Anspruch 2 oder 3,
**dadurch gekennzeichnet, daß** die reliefartige Vertiefung (43) als gestufte Vertiefung ausgebildet ist und die Auflageflächen für das Abdeckband (47) von einer Stützstufenanordnung (49) der Vertiefung gebildet sind.

5. Einrichtung nach einem der Ansprüche 1 bis 4,
**dadurch gekennzeichnet, daß** das Abdeckband (47) durch Laser-Schweißen an dem ersten Körper (3) angebracht ist.

6. Einrichtung nach einem der Ansprüche 1 bis 5,
**dadurch gekennzeichnet, daß** die Maßmarkierungen (37,41) an einem von dem ersten Körper (3) und dem Abdeckband (47) gesonderten Markierungsträger (29) angeordnet sind.

7. Einrichtung nach einem der Ansprüche 1 bis 6,
**dadurch gekennzeichnet, dass** an dem ersten (3) der beiden Körper (3,7) ein gesondertes Maßband (29) angebracht ist, welches mindestens eine Spur von in Bandlängsrichtung verteilten Maßmarkierungen (37,41) aufweist,
wobei das Maßband (29) an mindestens zwei in Bandlängsrichtung im Abstand voneinander angeordneten Fixationsstellen (155) an dem ersten Körper (3) fixiert ist und zwischen den Fixationsstellen in Bandlängsrichtung elastisch gedehnt ist.

8. Einrichtung nach Anspruch 7,
**dadurch gekennzeichnet, daß** das Maßband (29) lediglich im Bereich seiner in Bandlängsrichtung gegenüberliegenden Bandenden an dem ersten Körper (3) fixiert ist.

9. Einrichtung nach Anspruch 7 oder 8,
**dadurch gekennzeichnet, daß** die elastische Dehnung des Maßbands (29) mindestens 30 µm, vorzugsweise mindestens 50 µm, höchstvorzugsweise etwa 70 bis 100 µm pro Längenmeter des Maßbands (29) beträgt.

10. Einrichtung nach einem der Ansprüche 7 bis 9,
**dadurch gekennzeichnet, daß** das Maßband (29) von einem als Meterware gefertigten und von einer Vorratsrolle genommenen Bandmaterial gebildet ist.

11. Einrichtung nach einem der Ansprüche 7 bis 10,
**dadurch gekennzeichnet, daß** das Maßband (29) aus einem metallischen Werkstoff gefertigt ist.

12. Einrichtung nach einem der Ansprüche 7 bis 11,
**dadurch gekennzeichnet, daß** das Maßband (29) zur Bildung der Maßmarkierungen mit in Bandlängsrichtung aufeinanderfolgenden Materialschwächungszonen oder Materialdurchbrüchen (37,41) versehen ist.

13. Einrichtung nach einem der Ansprüche 7 bis 12,
**dadurch gekennzeichnet, daß** die Maßmarkierungen (37,41) eine Gruppe von Markierungen (37) umfassen, welche in Bandlängsrichtung in regelmäßigen Abständen aufeinanderfolgen.

14. Einrichtung nach einem der Ansprüche 7 bis 13,
**dadurch gekennzeichnet, daß** die Maßmarkierungen (37,41) eine Gruppe von Referenz-Markierungen (41) umfassen, welche derart gestaltet oder/und an dem Maßband (29) lokalisiert sind, daß ohne Kenntnis einer Anfangsposition des zweiten Körpers (7) relativ zu dem ersten Körper (3) durch Überfahren höchstens einiger weniger aufeinanderfolgender der Referenz-Markierungen (41) eine zumindest annähernde Bestimmung einer Endposition des zweiten Körpers (7) relativ zu dem ersten Körper (3) ermöglicht wird.

15. Einrichtung nach Anspruch 14,
**dadurch gekennzeichnet, daß** in Bandlängsrichtung einander paarweise benachbarte Referenz-Markierungen (41) einen Abstand voneinander aufweisen, der für mindestens einen Teil der Paare unterschiedlich ist.

16. Einrichtung nach einem der Ansprüche 7 bis 15,
**dadurch gekennzeichnet, daß** der erste Körper (3) ein Längskörper mit einer Längsachse (5), insbesondere eine Führungsschiene einer Linearführungseinrichtung, ist und das Maßband (29) in Richtung der Längsachse (5) an dem Längskörper (3) angebracht ist.

17. Verfahren zur Herstellung einer Einrichtung zur Ermittlung der Relativposition zweier relativ zueinander beweglicher Körper (3,7), wobei ein erster (3) der beiden Körper (3,7) über einen Markierungsbereich verteilt Maßmarkierungen (37,41) trägt und der zweite (7) der beiden Körper (3,7) eine auf die Maßmarkierung (37,41) ansprechende Sensoranordnung (31) trägt, welche im Zuge einer Relativbewegung der beiden Körper (3,7) den Markierungsbereich befährt, wobei bei dem Verfahren die Maßmarkierungen (37,41) durch ein von dem ersten Körper (3) gesondertes Abdeckband (47) abgedeckt werden, welches mit seiner dem ersten Körper (3) zugewandten Flachseite auf Auflageflächen (bei 49) des ersten Körpers (3) aufgelegt wird und längs seiner beiden in Bandlängsrichtung verlaufenden Längsränder durch je mindestens eine Längsschweißnaht (53) an dem ersten Körper (3) befestigt wird, insbesondere zur Herstellung der Einrichtung nach einem der Ansprüche 1 bis 16,
**dadurch gekennzeichnet, daß** die Längsschweißnähte (53) quer zur Bandlängsrichtung im Abstand vom jeweils benachbarten Längsrand des ungeschweißten Abdeckbands (47) angebracht werden, derart, daß sie eine Materialverschmelzung des Abdeckbands (47) mit dem ersten Körper (3) - gewünschtenfalls ausschließlich - im Bereich der Auflageflächen (bei 49) bewirken.

18. Verfahren zur Herstellung einer Einrichtung zur Ermittlung der Relativposition zweier relativ zueinander beweglicher Körper (3,7), wobei ein erster (3) der beiden Körper (3,7) über einen Markierungsbereich verteilt Maßmarkierungen (37,41) trägt und der zweite (7) der beiden Körper (3,7) eine auf die Maßmarkierung (37,41) ansprechende Sensoranordnung (31) trägt, welche im Zuge einer Relativbewegung der beiden Körper (3,7) den Markierungsbereich befährt, wobei bei dem Verfahren die Maßmarkierungen (37,41) durch ein von dem ersten Körper (3) gesondertes Abdeckband (47) abgedeckt werden, welches längs seiner beiden in Bandlängsrichtung verlaufenden Längsränder durch je mindestens eine Längsschweißnaht (53) an dem ersten Körper (3) befestigt wird, insbesondere zur Herstellung der Einrichtung nach einem der Ansprüche 1 bis 16,
**dadurch gekennzeichnet, daß** zwei verschiedenen Längsrändern des Abdeckbands (47) benachbarte Längsschweißnähte (53) im wesentlichen zeitgleich angebracht werden.

19. Verfahren nach Anspruch 18,
**dadurch gekennzeichnet, daß** die im wesentlichen zeitgleich angebrachten Längsschweißnähte (53) mit gleicher Schweißrichtung angebracht werden.

20. Verfahren nach Anspruch 19,
**dadurch gekennzeichnet, daß** die im wesentlichen zeitgleich angebrachten Schweißnähte (53) gemeinsam von einem Längsende des Abdeckbands (47) her angebracht werden.

21. Verfahren nach einem der Ansprüche 18 bis 20,
**dadurch gekennzeichnet, daß** die im wesentlichen zeitgleich angebrachten Längsschweißnähte (153) mittels eines Laser-Schweißgeräts (169) mit Bifokaloptik angebracht werden.

22. Verfahren nach Anspruch 17 oder 18, insbesondere zur Bereitstellung der Einrichtung nach einem der Ansprüche 6 - 16,
**dadurch gekennzeichnet, daß** ein Maßband (29) an einem gesonderten Träger (3) angebracht wird, wobei das Maßband (29) an mindestens zwei in Bandlängsrichtung im Abstand voneinander angeordneten Fixationsstellen (155) unter elastischer Dehnung zwischen den Fixationsstellen (155) an dem Träger (3) fixiert wird.

23. Verfahren nach Ansprauch 17 oder 18 zur Herstellung der Einrichtung nach Anspruch 16, bei dem zur Bereitstellung des Längskörpers (3) ein Längenstück von einem Materialstrang (103) an einer Trennstelle (175) abgetrennt wird,
**dadurch gekennzeichnet, daß** ein Maßband (129) verwendet wird, das sich über einen Materialabschnitt des Materialstrangs (103) erstreckt, der länger, gewünschtenfalls um ein Mehrfaches länger, als das abzutrennende Längenstück (3) ist, daß dieses Maßband (129) zunächst lediglich im Bereich seiner in Richtung der Längsachse gegenüberliegenden Bandenden an endseitigen Fixationsstellen (155) unter elastischer Dehnung an dem Materialstrang (103) fixiert wird, daß das Maßband (129) sodann in Richtung der Längsachse beidseits der Trennstelle (175) an zusätzlichen trennstellennahen Fixationsstellen (177) an dem Materialstrang (103) fixiert wird und daß anschließend der Materialstrang (103) zusammen mit dem Maßband (129) zwischen den trennstellennahen Fixationsstellen (177) durchtrennt wird.

24. Verfahren nach Anspruch 23,
**dadurch gekennzeichnet, daß** das Maßband (129) an den Fixationsstellen (155,177) durch Schweißen, insbesondere PunktSchweißen, an dem Materialstrang (103) fixiert wird.

25. Verfahren nach Anspruch 23 oder 24,
**dadurch gekennzeichnet, daß** an dem Materialstrang (103) vor dessen Durchtrennung und relativ zu diesem unbeweglich eine von dem Materialstrang (103) und dem Maßband (129) gesonderte, sich über die Länge des Materialabschnitts des Materialstrangs (103) erstreckende Maßbandabdeckung (147) angebracht wird, welche an der Trennstelle (175) zusammen mit dem Materialstrang (103) und dem Maßband (129) durchtrennt wird und gewünschtenfalls vor der Durchtrennung nahe der Trennstelle (175) an dem Materialstrang (103) oder/und dem Maßband (129) fixiert wird.

26. Verfahren nach Anspruch 25,
**dadurch gekennzeichnet, daß** als Maßbandabdeckung (147) ein Abdeckband verwendet wird, welches längs seiner in Richtung der Längsachse verlaufenden Längsränder, gewünschtenfalls im wesentlichen durchgehend, an dem Materialstrang (103) befestigt wird.

## Claims

1. Arrangement for determining the relative position of two bodies (3, 7) which are movable in relation to each other, wherein a first (3) of the two bodies (3, 7) carries measuring markings (37, 41) which are distributed over a marking range, and the second (7) of the two bodies (3, 7) carries a sensor arrangement (31) which responds to the measuring markings (37, 41) and travels over the marking range in the course of a relative movement of the two bodies (3, 7), wherein the measuring markings (37, 41) are covered by a cover tape (47) which is separate from the first body (3), which lies with its flat side that is directed towards the first body on supporting surfaces (at 49) of the first body (3) and which is attached to the first body (3) along its two longitudinal edges which run in the longitudinal direction of the tape, by means of at least one respective longitudinal welding seam (53), **characterized in that** the longitudinal welding seams (53) run crosswise to the longitudinal direction of the tape at a distance from the respectively adjacent longitudinal edge of the cover tape (47) and form, in the region of the supporting surfaces (at 49), a material fusing zone of the cover tape (47) with the first body (3).

2. Arrangement according to Claim 1, **characterized in that** the measuring markings (37, 41) are sunk into a relief-like depression (43) of the first body (3), and **in that** the cover tape (47) is inserted into the relief-like depression (43).

3. Arrangement according to Claim 2, **characterized in that** the cover tape (47) is inserted into the relief-like depression (43) in a manner such that the outer surface of the cover tape (47) lies approximately flush with the adjacent surface regions (45) of the first body (3).

4. Arrangement according to Claim 2 or 3, **characterized in that** the relief-like depression (43) is designed as a stepped depression and **in that** the supporting surfaces for the cover tape (47) are formed by a support-step arrangement (49) of the depression.

5. Arrangement according to one of Claims 1 to 4, **characterized in that** the cover tape (47) is applied to the first body (3) by means of laser welding.

6. Arrangement according to one of Claims 1 to 5, **characterized in that** the measuring markings (37, 41) are arranged on a markings carrier (29) which is separate from the first body (3) and from the cover tape (47).

7. Arrangement according to one of Claims 1 to 6, **characterized in that** a separate measuring tape (29) is applied to the first (3) of the two bodies (3, 7), the measuring tape (29) featuring at least one track of measuring markings (37, 41) which are distributed in the longitudinal direction of the tape, wherein the measuring tape (29) is attached to the first body (3) at at least two attachment points (155) which are arranged at a distance from each other in the longitudinal direction of the tape, and is stretched elastically between the attachment points in the longitudinal direction of the tape.

8. Arrangement according to Claim 7, **characterized in that** the measuring tape (29) is attached to the first body (3) solely in the region of its tape ends that lie opposite each other in the longitudinal direction of the tape.

9. Arrangement according to Claim 7 or 8, **characterized in that** the elastic stretching of the measuring tape (29) amounts to at least 30 µm, preferably at least 50 pm, most preferably about 70 to 100 µm per linear metre of the measuring tape (29).

10. Arrangement according to one of Claims 7 to 9, **characterized in that** the measuring tape (29) is formed by a tape material produced by the metre and drawn from a supply roll.

11. Arrangement according to one of Claims 7 to 10, **characterized in that** the measuring tape (29) is produced from a metallic material.

12. Arrangement according to one of Claims 7 to 11, **characterized in that** the measuring tape (29) is equipped with weakened material zones or with material breakthroughs (37, 41) which follow one another in the longitudinal direction of the tape, in order to form measuring markings.

13. Arrangement according to one of Claims 7 to 12, **characterized in that** the measuring markings (37, 41) comprise a group of markings (37) which follow one another at regular istances in the longitudinal direction of the tape.

14. Arrangement according to one of Claims 7 to 13, **characterized in that** the measuring markings (37, 41) comprise a group of reference markings (41) which are designed and/or located on the measuring tape (29) in a manner such that, without knowing an initial position of the second body (7) relative to the first body (3), one can determine an at least approximate end position of the second body (7) relative to the first body (3), by passing over at most a few consecutive reference markings (41).

15. Arrangement according to Claim 14, **characterized in that** pairs of reference markings (41) that are adjacent in the longitudinal direction of the tape have a distance from one another, which differs for at least some of the pairs.

16. Arrangement according to one of Claims 7 to 15, **characterized in that** the first body (3) is an elongated body with a longitudinal axis (5), in particular a guide rail of a linear-guide arrangement, and the measuring tape (29) is applied to the elongated body (3) in the direction of the longitudinal axis (5).

17. Process for the production of an arrangement for determining the relative position of two bodies (3, 7) which are movable relative to each other, wherein a first (3) of the two bodies (3, 7) carries measuring markings (37, 41) which are distributed over a marking range and the second (7) of the two bodies (3, 7) carries a sensor arrangement (31) which responds to the measuring marking (37, 41) and travels over the marking range in the course of a relative movement of the two bodies (3, 7), wherein, during the process, the measuring markings (37, 41) are covered by a cover tape (47) which is separate from the first body (3) and which is laid with its flat side, which is turned towards the first body (3), upon supporting surfaces (at 49) of the first body (3), and which is attached to the first body (3) along its two longitudinal edges that run in the longitudinal direction of the tape, by means of at least one respective longitudinal welding seam (53), in particular for the production of the arrangement according to one of Claims 1 to 16, **characterized in that** the longitudinal welding seams (53) are applied, crosswise to the longitudinal direction of the tape, at a distance from the respectively adjacent longitudinal edge of the unwelded cover tape (47), in a manner such that they cause a material fusing of the cover tape (47) with the first body (3) - exclusively, if so desired - in the region of the supporting surfaces (at 49).

18. Process for the production of an arrangement for the determination of the relative position of two bodies (3, 7) that are movable relatively to each other, wherein a first (3) of the two bodies (3, 7) carries measuring markings (37, 41) that are distributed over a marking range and the second (7) of the two bodies (3, 7) carries a sensor arrangement (31) which responds to the measuring marking (37, 41) and travels over the marking range in the course of a relative movement of the two bodies (3, 7), wherein, during the process, the measuring markings (37, 41) are covered by a cover tape -(47) which is separate from the first body (3) and which is attached to the first body (3) along its two longitudinal edges that run in the longitudinal direction of the tape, by means of at least one respective longitudinal welding seam (53), in particular for the production of the arrangement according to one of Claims 1 to 16, **characterized in that** longitudinal welding seams (53) adjacent to two different longitudinal edges of the cover tape (47) are applied essentially simultaneously.

19. Process according to Claim 18, **characterized in that** the longitudinal welding seams (53) which are applied essentially simultaneously are applied in the same welding direction.

20. Process according to Claim 19, **characterized in that** the welding seams (53) that are applied essentially simultaneously are applied jointly, starting from one lengthwise end of the cover tape (47).

21. Process according to one of Claims 18 to 20, **characterized in that** the longitudinal welding seams (153) which are applied essentially simultaneously are applied by means of a laser welding device (169) with bifocal optics.

22. Process according to Claim 17 or 18, in particular for providing the arrangement according to one of Claims 6 - 16, **characterized in that** a measuring tape (29) is applied to a separate carrier, wherein the measuring tape (29) is attached to the carrier (3) at at least two attachment points (155) which are arranged at a distance from each other in the longitudinal direction of the tape, with elastic stretching between the attachment points (155).

23. Process according to Claim 17 or 18 for the production of the arrangement according to Claim 16, wherein a length of a material strand (103) is cut at a cut-off point (175), in order to provide the elongated body (3);
**characterized in that** a measuring tape (129) is used which extends over a material section of the material strand (103) which is longer - if desired, by several multiples - than the length (3) that is to be cut, **in that** this measuring tape (129) is first attached to the material strand (103) at attachment points (155) associated with the tape ends solely in the region of its tape ends which lie opposite each other in the direction of the longitudinal axis, with elastic stretching, **in that** the measuring tape (129) is then attached to the material strand (103) at additional attachment points (177) which are close to the cut-off points, in the direction of the longitudinal axis, on both sides of the cut-off point (175), and **in that** next the material strand (103) is cut, together with the measuring tape (129), between the attachment points (177) that are close to the cut-off points.

24. Process according to Claim 23, **characterized in that** the measuring tape (129) is attached to the material strand (103) at the attachment points (155, 177) by means of welding, in particular spot welding.

25. Process according to Claim 23 or 24, **characterized in that** applied to the material strand (103), before the latter is cut and unmovable relative to it, is a measuring-tape cover (147) separate from the material strand (103) and the measuring tape (129), which measuring-tape cover (147) extends over the length of the material section of the material strand (103) and is cut at the cut-off point (175), together with the material strand (103) and the measuring tape (129), and, if desired, is attached to the material strand (103) and/or the measuring tape (129) close to the cut-off point (175) before the cutting.

26. Process according to Claim 25, **characterized in that** as measuring-tape cover (147) a cover tape is used which is attached to the material strand (103) along its longitudinal edges which run in the direction of the longitudinal axis, if desired essentially in a continuous fashion.

## Revendications

1. Dispositif de détermination d'une position relative entre deux corps (3, 7) mobiles l'un par rapport à l'autre, un premier (3) des deux corps (3, 7) portant des marques de mesure (37, 41) réparties sur une zone de marquage et le deuxième (7) des deux corps (3, 7) portant un ensemble de détecteurs (31) sensible aux marques de mesure (37, 41), cet ensemble parcourant la zone de marquage au cours d'un mouvement relatif des deux corps (3, 7), les marques de mesure (37, 41) étant couvertes par un ruban de protection (47) séparé du premier corps (3), le ruban étant posé par son côté plat tourné vers le premier corps sur des surfaces d'appui (en 49) du premier corps (3) et fixé au premier corps (3) par respectivement au moins une soudure longitudinale (53) le long de ses deux bords longitudinaux s'étendant dans le sens longitudinal du ruban, **caractérisé en ce que** les soudures longitudinales (53) s'étendent transversalement au sens longitudinal du ruban à une distance du bord longitudinal respectivement voisin du ruban de protection (47) et forment au niveau des surfaces d'appui (en 49) une zone de jonction des matériaux du ruban de protection (47) avec le premier corps (3).

2. Dispositif selon la revendication 1, **caractérisé en ce que** les marques de mesure (37, 41) sont disposées encastrées dans un renfoncement (43) de type relief du premier corps (3) et le ruban de protection (47) est inséré dans le renfoncement de type relief (43).

3. Dispositif selon la revendication 2, **caractérisé en ce que** le ruban de protection (47) est inséré dans le renfoncement de type relief (43) de telle sorte que la surface extérieure du ruban de protection (47) se trouve de façon approximativement affleurée avec des zones superficielles (45) du premier corps (3).

4. Dispositif selon la revendication 2 ou 3, **caractérisé en ce que** le renfoncement de type relief (43) est réalisé comme un renfoncement gradué et les surfaces d'appui pour le ruban de protection (47) sont formées par un dispositif de graduations d'appui (49) du renfoncement.

5. Dispositif selon l'une des revendications 1 à 4, **caractérisé en ce que** le ruban de protection (47) est appliqué au premier corps (3) par soudage au laser.

6. Dispositif selon l'une des revendications 1 à 5, **caractérisé en ce que** les marques de mesure (37, 41) sont disposées sur un support de marquage (29) séparé du premier corps (3) et du ruban de protection (47).

7. Dispositif selon l'une des revendications 1 à 6, **caractérisé en ce que** sur le premier (3) des deux corps (3, 7), un ruban de mesure (29) séparé est attaché qui présente au moins un tracé de marques de mesure (37, 41) réparties dans le sens longitudinal du ruban, le ruban de mesure (29) étant fixé en au moins deux points de fixation (155) disposés de façon mutuellement espacée dans le sens longitudinal du ruban et étiré de façon élastique entre les points de fixation dans le sens longitudinal du ruban.

8. Dispositif selon la revendication 7, **caractérisé en ce que** le ruban de mesure (29) est fixé au premier corps (3) uniquement au niveau de ses extrémités de ruban opposées dans le sens longitudinal du ruban.

9. Dispositif selon la revendication 7 ou 8, **caractérisé en ce que** l'étirement élastique du ruban de mesure (29) s'élève à au moins 30 µm, de préférence à au moins 50 µm, de façon particulièrement préférée. à environ 70 à 100 µm par mètre linéaire du ruban de mesure (29).

10. Dispositif selon l'une des revendications 7 à 9, **caractérisé en ce que** le ruban de mesure (29) est formé à partir d'un matériau de ruban fabriqué au mètre et prélevé sur une bobine d'alimentation.

11. Dispositif selon l'une des revendications 7 à 10, **caractérisé en ce que** le ruban de mesure (29) est fabriqué à partir d'un matériau métallique.

12. Dispositif selon l'une des revendications 7 à 11, **caractérisé en ce que** le ruban de mesure (29) pour la formation des marques de mesure est prévu avec des zones d'affaiblissement du matériau ou des perforations de matériau (37, 41) consécutives dans le sens longitudinal du ruban.

13. Dispositif selon l'une des revendications 7 à 12, **caractérisé en ce que** les marques de mesure (37, 41) comprennent un groupe de marques (37) qui se succèdent à intervalles réguliers dans le sens longitudinal du ruban.

14. Dispositif selon l'une des revendications 7 à 13, **caractérisé en ce que** les marques de mesure (37, 41) comprennent un groupe de marques de référence (41) qui sont configurées et/ou localisées sur le ruban de mesure (29) de telle sorte que le fait de parcourir un maximum de quelques rares marques de référence (41) consécutives, sans connaître la position de départ du deuxième corps (7) par rapport au premier corps (3), permet une détermination au moins approximative d'une position de fin du deuxième corps (7) par rapport au premier corps (3).

15. Dispositif selon la revendication 14, **caractérisé en ce que** des marques de référence (41) mutuellement voisines par paires présentent une distance les unes par rapport aux autres qui est différente pour au moins une partie des paires.

16. Dispositif selon l'une des revendications 7 à 15, **caractérisé en ce que** le premier corps (3) est un corps allongé avec un axe longitudinal (5), en particulier un rail de guidage d'un dispositif de guidage linéaire, et le ruban de mesure (29) est appliqué au corps allongé (3) dans le sens de l'axe longitudinal.

17. Procédé de fabrication d'un dispositif de détermination de la position relative de deux corps (3, 7) mobiles l'un par rapport à l'autre, un premier (3) des deux corps (3, 7) portant des marques de mesure (37, 41) réparties sur une zone de marquage et le deuxième (7) des deux corps (3, 7) portant un ensemble de détecteurs (31) sensible aux marques de mesure (37, 41), cet ensemble parcourant la zone de marquage au cours d'un mouvement relatif des deux corps (3, 7), procédé selon lequel les marques de mesure (37, 41) sont recouvertes d'un. ruban de protection (47) séparé du premier corps (3), le ruban étant posé par son côté plat tourné vers le premier corps (3) sur des surfaces d'appui (en 49) du premier corps (3) et fixé au premier corps (3) par respectivement au moins une soudure longitudinale (53) le long de ses deux bords longitudinaux s'étendant dans le sens longitudinal du ruban, en particulier pour fabriquer le dispositif selon l'une quelconque des revendications 1 à 16, **caractérisé en ce que** les soudures longitudinales (53) sont appliquées transversalement au sens longitudinal du ruban à une distance du bord longitudinal respectivement voisin du ruban de protection (47) non soudé de telle sorte qu'elles provoquent une jonction des matériaux du ruban de protection (47) avec le premier corps (3) - si souhaité exclusivement - au niveau des surfaces d'appui (en 49).

18. Procédé de fabrication d'un dispositif de détermination de la position relative de deux corps (3, 7) mobiles l'un par rapport à l'autre, un premier (3) des deux corps (3, 7) portant des marques de mesure (37, 41) réparties sur une zone de marquage et le deuxième (7) des deux corps (3, 7) portant un ensemble de détecteurs (31) sensible aux marques de mesure (37, 41), cet ensemble parcourant la zone de marquage au cours d'un mouvement relatif des deux corps (3, 7), procédé selon lequel les marques de mesure (37, 41) sont recouvertes d'un ruban de protection (47) séparé du premier corps (3), le ruban étant fixé au premier corps (3) par respectivement au moins une soudure longitudinale (53) le long de ses deux bords longitudinaux s'étendant dans le sens longitudinal du ruban, en particulier pour fabriquer le dispositif selon l'une quelconque des revendications 1 à 16, **caractérisé en ce que** deux soudures longitudinales (53) voisines de différents bords longitudinaux du ruban de protection (47) sont appliquées substantiellement en même temps.

19. Procédé selon la revendication 18, **caractérisé en ce que** les soudures longitudinales (53) appliquées substantiellement en même temps sont appliquées dans la même direction de soudage.

20. Procédé selon la revendication 19, **caractérisé en ce que** les soudures (53) appliquées substantiellement en même temps sont appliquées à partir d'une extrémité longitudinale du ruban de protection (47).

21. Procédé selon l'une quelconque des revendications 18 à 20, **caractérisé en ce que** les soudures longitudinales (153) appliquées substantiellement en même temps sont appliquées au moyen d'un dispositif de soudage au laser (169) avec un système optique bifocal.

22. Procédé selon la revendication 17 ou 18, en particulier pour la mise à disposition du dispositif selon l'une quelconque des revendications 6 à 16, **caractérisé en ce qu'**un ruban de mesure (29) est attaché à un support séparé (3), le ruban de mesure (29) étant fixé au support (3) en au moins deux points de fixation (155) disposés dans le sens longitudinal du ruban à une distance l'un de l'autre en étant étiré de façon élastique entre les points de fixation (155).

23. Procédé selon la revendication 17 ou 18 pour la fabrication du dispositif selon la revendication 16, dans lequel pour la mise à disposition du corps allongé (3), une pièce de longueur est séparée d'un faisceau de matériau (103) en un point de séparation (175), **caractérisé en ce qu'**un ruban de mesure (129) est utilisé qui s'étend sur une section de matériau du faisceau de matériau (103) qui est plus longue, si souhaité plusieurs fois plus longue que la pièce de longueur (3) à séparer, **en ce que** ce ruban de mesure (129) est d'abord fixé au faisceau de matériau (103) uniquement au niveau de ses extrémités de ruban opposées dans le sens de l'axe longitudinal en des points de fixation (155) côté extrémité en étant étiré de façon élastique, **en ce que** le ruban de mesure (129) est ensuite fixé au faisceau de matériau (103) dans le sens de l'axe longitudinal des deux côtés du point de séparation (175) en des points de fixation (177) supplémentaires, proches des points de séparation, et **en ce qu'**ensuite, le faisceau de matériau (103) avec le ruban de mesure (129) est sectionné entre les points de fixation (177) proches des points de séparation.

24. Procédé selon la revendication 23, **caractérisé en ce que** le ruban de mesure (129) est fixé au faisceau de matériau (103) aux points de fixation (155, 177) par soudage, en particulier par soudage par point.

25. Procédé selon la revendication 23 ou 24, **caractérisé en ce qu'**une protection de ruban de mesure (147) séparée du faisceau de matériau (103) et du ruban de mesure (129), s'étendant sur la longueur de la section de matériau du faisceau de matériau (103), est attachée au faisceau de matériau (103) avant qu'il ne soit sectionné et de façon immobile par rapport à celui-ci, cette protection étant sectionnée au point de séparation (175) avec le faisceau de matériau (103) et le ruban de mesure (129) et fixée au faisceau de matériau (103) et/ou au ruban de mesure (129), si souhaité, à proximité du point de séparation (175), avant le sectionnement.

26. Procédé selon la revendication 25, **caractérisé en ce que** comme protection de ruban de mesure (147), un ruban de protection est utilisé qui est fixé au faisceau de matériau le long de ses bords longitudinaux s'étendant dans le sens de l'axe longitudinal, si souhaité substantiellement de façon continue.
